(19) Europäisches Patentamt
European Patent Office
Office européen des brevets

(11) EP 4 446 329 B1

(12) EUROPEAN PATENT SPECIFICATION

(45) Date of publication and mention of the grant of the patent:
**01.10.2025 Bulletin 2025/40**

(21) Application number: **24169282.1**

(22) Date of filing: **09.04.2024**

(51) International Patent Classification (IPC):
***C07F 9/6593*** (2006.01) ***H01G 11/06*** (2013.01)
***H01G 11/60*** (2013.01) ***H01G 11/62*** (2013.01)
***H01G 11/64*** (2013.01) ***H01M 10/052*** (2010.01)
***H01M 10/42*** (2006.01) ***H01M 10/0569*** (2010.01)
***H01M 10/0567*** (2010.01) ***H01M 10/0568*** (2010.01)
***H01M 10/0565*** (2010.01) ***H01M 10/0525*** (2010.01)

(52) Cooperative Patent Classification (CPC):
**C07F 9/65815; H01G 11/62; H01G 11/64; H01M 10/052; H01M 10/0525; H01M 10/0567; H01M 10/0568; H01M 10/0569; H01M 10/4235;** H01G 11/06; H01G 11/60; Y02E 60/10

# (54) A PHOSPHAZENE DERIVATIVE, COMPOSITION, AND AN ELECTROCHEMICAL DEVICE COMPRISING THE SAME

PHOSPHAZENDERIVAT, ZUSAMMENSETZUNG UND ELEKTROCHEMISCHE VORRICHTUNG DAMIT

DÉRIVÉ DE PHOSPHAZÈNE, COMPOSITION ET DISPOSITIF ÉLECTROCHIMIQUE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.04.2023 TW 112114098**

(43) Date of publication of application:
**16.10.2024 Bulletin 2024/42**

(73) Proprietors:
- **China Petrochemical Development Corporation, Taipei (Taiwan)**
  **Kaohsiung City 815 (TW)**
- **National Cheng Kung University**
  **Tainan City, 701 (TW)**

(72) Inventors:
- **JAN, Jeng-Shiung**
  **701 Tainan City (TW)**
- **CHEN, Jian-Zhou**
  **815 Kaohsiung City (TW)**
- **HUANG, Chih-Wei**
  **815 Kaohsiung City (TW)**
- **LI, Wei-Ying**
  **815 Kaohsiung City (TW)**
- **LEE, Chun-Chin**
  **815 Kaohsiung City (TW)**

(74) Representative: **Manitz Finsterwald**
**Patent- und Rechtsanwaltspartnerschaft mbB**
**Martin-Greif-Straße 1**
**80336 München (DE)**

(56) References cited:
**US-A1- 2013 196 223**

- **MAHANTA CHANDRA S. ET AL: "Cobaltabisdicarbollide based metallodendrimers with cyclotriphosphazene core", JOURNAL OF ORGANOMETALLIC CHEMISTRY, vol. 865, 1 June 2018 (2018-06-01), AMSTERDAM, NL, pages 183 - 188, XP093200386, ISSN: 0022-328X, DOI: 10.1016/j.jorganchem.2018.02.022**
- **YE CHENGFENG ET AL: "MICROWAWASSISTED SYNTHESIS OF HEXASUBSTITUTED CYCLOTRIPHOSPHAZENES", ORGANIC PREPARATIONS AND PROCEDURES INTERNATIONAL: THE NEW JOURNAL FOR ORGANIC SYNTHESIS, vol. 33, no. 4, 1 August 2001 (2001-08-01), US, pages 376 - 379, XP093200381, ISSN: 0030-4948, DOI: 10.1080/00304940109356604**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

BACKGROUND

1. Technical Field

The present disclosure relates to a composition used in an electrochemical device, especially to a phosphazene derivatives-based additive in the composition applied in the electrochemical device.

2. Description of Associated Art

Currently, lithium-ion batteries have been used broadly in the electronic, energy storing, biochemical, electric vehicles, and other devices and equipment. The batteries correspondingly used therefore are expected to have high energy densities and great safeties, as well as the ability to maintain the advantages such as high charge and discharge capacities after long-term usage. Thus, lithium-ion batteries meeting the characteristic requirements are of increasing interest in the associated academics and industries.

Lithium-ion batteries have been used in high power products including electric tools, electric vehicles, and so on, due to their advantages of light mass, high energy density, good cycle properties, high power, and the like. The selection of solid electrolytes, colloidal electrolytes, and fire retardant electrolytes has become a focus of attention for improving the safety of lithium-ion batteries, based on the safety and cost considerations of electric vehicles for a battery as the power source. Although a solid/colloidal electrolyte material can address the risk of electrolyte leakage, it has an issue of the interface resistance still needed to be addressed in various fields and is not a product technique capable of being commercialized in the near future. Therefore, the selection of a suitable fire-retarding electrolyte is one of the options of interest to a manufacturer currently.

A fire-retarding agent containing organic phosphate compounds, triphenyl phosphate (TPP) and tributyl phosphate (TBP), has been described in a literature (Journal of Power Source, Volume 119-121, 1 June 2003, Pages 383-387) and provides excellent thermal safety for a lithium-ion battery in a completely charged state. However, the molecules of most phosphorus-containing compounds have large groups, with an increase in viscosity of the electrolyte in the lithium-ion battery due to excessive addition of phosphorus-containing compounds, which reduces the ion conductivity and has a great side effect on the rate performance of the lithium-ion battery. A highly efficient fire-retarding additive, (ethoxy)pentafluorocyclotriphosphazene ($N_3P_3F_5OCH_2CH_3$, PFPN), has been described in another literature (Journal of Power Source, Volume 278, 15 March 2015, Pages 190-196) and has been synthesized and used as a safety protective additive in a rechargeable lithium-ion battery. An electrochemical cell disclosed in US 2013/196223 A1 includes a negative electrode comprising polyphosphazene cyclomatrix and particles within pores of the polyphosphazene cyclomatrix, wherein the polyphosphazene cyclomatrix comprises a plurality of phosphazene compounds and a plurality of cross-linkages and may improve performance of the negative electrode. It is believed that the PFPN additive is one of the most efficient fire-retarding additives reported in all literature up to date. The PFPN additive has exhibited good electrochemical compatibility with a graphite anode and a $LiCoO_2$ cathode, as demonstrated by the charge-discharge test. Meanwhile, the PFPN additive incorporated can improve the cycle performance of the $LiCoO_2$ electrode at a high voltage cutoff of 4.5 V, suggesting its highly promising application in a high pressure lithium-ion battery.

The PFPN additive, a fluorine-containing phosphazene derivative, has an efficacy better than that of conventional phosphate fire retardants, however, the battery manufacturers show no interest in importing the additive due to the high price. Thus, there is an issue needed to be solved urgently in the art to provide an electrolyte additive with low price, ease of process and ability to improve the safety of a battery.

SUMMARY

Given the disadvantages of the prior art described above, the present disclosure provides an electrolyte additive with a high electrochemical stability, a low addition amount of additives, and an ability to improve safety of a lithium-ion battery in a good cycle state, without an increase in complexity of process.

For the purpose above, the present disclosure provides a phosphazene derivative having a structure of Formula (I):

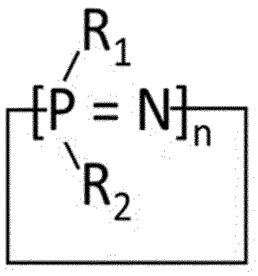

(I),

wherein n is an integer of 3 to 6, $R_1$ and $R_2$ are independently selected from a group represented by Formula (I-1) or Formula (I-2),

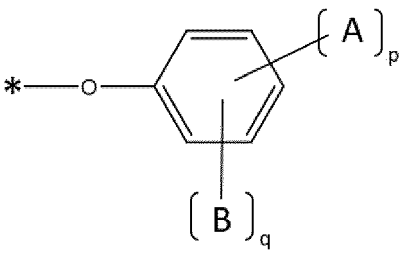

(I-1),

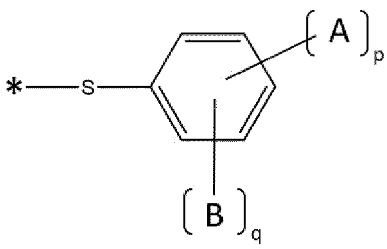

(I-2);

wherein A is $-R_3-O-R_4$, $-R_3-CH_{3-m}(OR_4)_m$, $-CH_{3-m}(OR_4)_m$ or

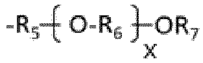

,

$R_3$ is unsubstituted $C_1$-$C_8$ alkylene or $C_1$-$C_8$ alkylene substituted with $C_1$-$C_8$ alkyl, $R_4$ is $C_1$-$C_8$ alkyl, $R_5$ is $C_1$-$C_3$ alkyl, $R_6$ is $C_1$-$C_3$ alkylene, $R_7$ is $C_1$-$C_3$ alkyl, x is 1 or 2, m is 2 or 3, p is a number of the A bonded to a carbon in a benzene ring to which the A is attached, and p is an integer of 1 to 3;
B is $C_1$-$C_8$ alkoxy or $C_1$-$C_8$ alkyl, and q is an integer of 0 to 3; and
$0 < p + q \leq 5$.

In one embodiment of the phosphazene derivative of the present disclosure, n is 3, and $R_1$ and $R_2$ are groups represented by Formula (I-1), A is $-R_3-O-R_4$, $R_3$ is $C_1$-$C_8$ alkylene, $R_4$ is $C_1$-$C_8$ alkyl, and p is 1; B is $C_1$-$C_8$ alkoxy, and q is 0 or 1; and $0 < p + q \leq 2$.

In one embodiment of the phosphazene derivative of the present disclosure, when the $R_1$ and $R_2$ are selected from groups shown in Formula (I-1), the phosphazene derivative is one selected from the group consisting of compounds of (1-1) to (1-3):

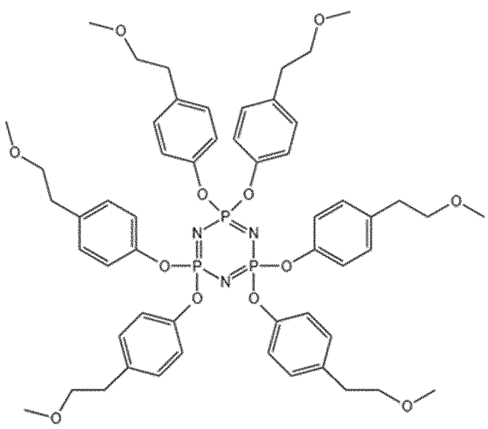

(1-1);

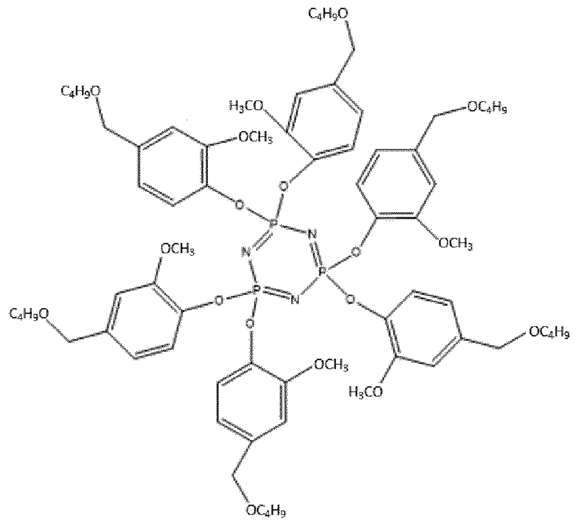

(1-2);

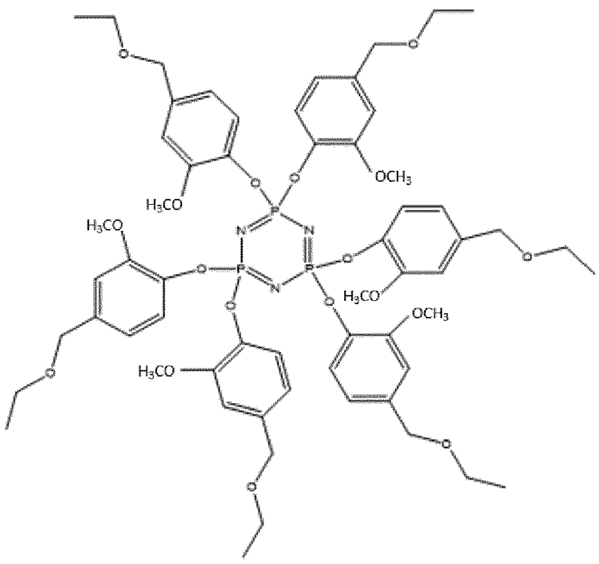

(1-3);

The present disclosure further provides a composition for an electrochemical device, and the composition comprises an electrolyte, a non-aqueous solvent and an additive comprising the phosphazene derivative of the present disclosure.

In one embodiment of the composition of the present disclosure, in the phosphazene derivative having the structure of Formula (I), n is 3, and $R_1$ and $R_2$ are groups showed in Formula (I-1), A is $-R_3-O-R_4$, $R_3$ is $C_1-C_8$ alkylene, $R_4$ is $C_1-C_8$ alkyl, and p is 1; B is $C_1-C_8$ alkoxy, and q is 0 or 1; and $0 < p + q \leq 2$.

In one embodiment of the composition of the present disclosure, when the $R_1$ to $R_2$ are selected from groups showed in Formula (I-1), the phosphazene derivative is one selected from the group consisting of compounds of (1-1) to (1-3):

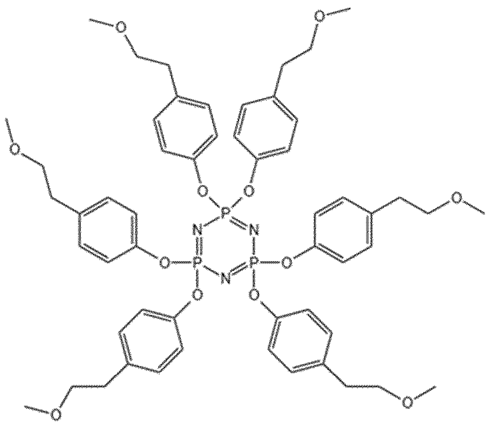

(1-1);

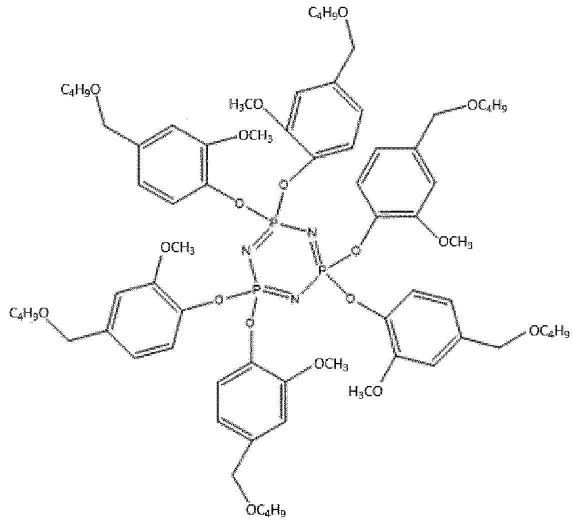

(1-2);

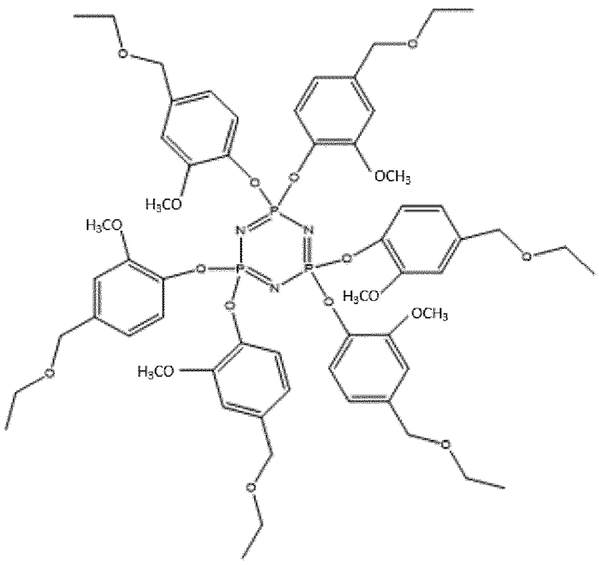

(1-3);

In one embodiment of the composition of the present disclosure, the electrolyte is present at an amount of 9.95 to 19.95 wt.% based on a total weight of the composition.

In one embodiment of the composition of the present disclosure, the additive is present at an amount of 0.05 to

20.0 wt.% based on a total weight of the composition.

In one embodiment of the composition of the present disclosure, the electrolyte comprises at least one selected from lithium hexafluorophosphate ($LiPF_6$), lithium fluoroborate ($LiBF_4$), lithium bis(trifluoromethanesulfonyl)imide ($LiN(CF_3SO_2)_2$), and lithium trifluoromethanesulfonate ($LiCF_3SO_3$).

In one embodiment of the composition of the present disclosure, the non-aqueous solvent comprises at least one selected from the group consisting of carbonates, furans, ethers, sulfides, and nitriles.

In one embodiment of the composition of the present disclosure, the non-aqueous solvent comprises at least one selected from the group consisting of ether-based polymers, polymethacrylate-based polymers, polyacrylated polymers, and fluoropolymers.

The present disclosure further provides an electrochemical device, comprising an anode, a cathode, and the composition of the present disclosure configured between the anode and the cathode.

In one embodiment of the electrochemical device of the present disclosure, it is a lithium-ion secondary battery.

Accordingly, the composition used in an electrochemical device of the present disclosure comprises a novel phosphazene derivative-based additive, and the defect in the safety of the conventional lithium-ion battery can be improved by the use of the additive.

BRIEF DESCRIPTION OF THE DRAWINGS

The present disclosure can be more fully understood by reading the following descriptions of the embodiments, with reference made to the accompanying drawings.

FIGs. 1A to 1D are NMR spectra of the compounds of Formulae 1-1 to 1-4 of the present disclosure, respectively.

FIGs. 2A to 2E show results of 1C cycle life tests under an environmental temperature of 25 °C for batteries having the electrolytes without addition of the compound of Formula 1-1 or with addition of the compound of Formula 1-1 at an amount of 5%, 10%, 15% and 20%, respectively.

FIGs. 3A to 3E show results of charge-discharge rate tests under an environmental temperature of 25°C with different rates of 0.1 C, 0.2 C, 0.3 C, 0.5 C and 1 C for batteries having the electrolyte without addition of the compound of Formula 1-1 or with addition of the compound of Formula 1-1 at an amount of 5%, 10%, 15% and 20%, respectively.

FIGs. 4A to 4B show observation curves of a battery voltage and a temperature in nail penetration tests on NMC622 lithium ion batteries.

DETAILED DESCRIPTION OF THE PREFERRED EMBODIMENTS

The following examples are used for illustrating the present disclosure. A person skilled in the art can easily conceive the other advantages and effects of the present disclosure, based on the disclosure of the specification. The present disclosure can also be implemented or applied as described in different examples. It is possible to modify or alter the following examples for carrying out this disclosure without contravening its scope, for different aspects and applications.

The present disclosure is directed to a phosphazene derivative having a structure of Formula (I):

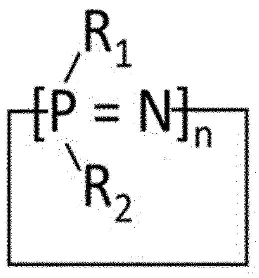

(I),

wherein n is an integer of 3 to 6, $R_1$ and $R_2$ are independently selected from a group represented by Formula (I-1) or Formula (I-2),

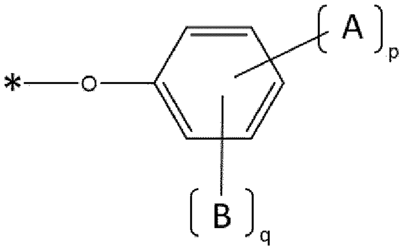
(I-1),

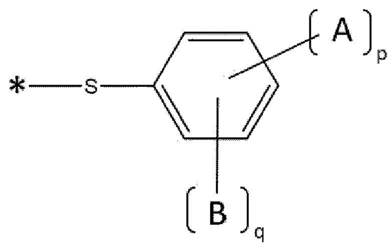
(I-2);

wherein A is $-R_3-O-R_4$, $-R_3-CH_{3-m}(OR_4)_m$, $-CH_{3-m}(OR_4)_m$ or

$$-R_5-[O-R_6]_x-OR_7$$ ,

$R_3$ is unsubstituted $C_1$-$C_8$ alkylene or $C_1$-$C_8$ alkylene substituted with $C_1$-$C_8$ alkyl, $R_4$ is $C_1$-$C_8$ alkyl, $R_5$ is $C_1$-$C_3$ alkyl, $R_6$ is $C_1$-$C_3$ alkylene, $R_7$ is $C_1$-$C_3$ alkyl, x is 1 or 2, m is 2 or 3, p is a number of the A bonded to a carbon in a benzene ring to which the A is attached, and p is an integer of 1 to 3;
B is $C_1$-$C_8$ alkoxy or $C_1$-$C_8$ alkyl, and q is an integer of 0 to 3; and
$0 < p + q \leq 5$.

In one embodiment, a range of the number of carbon atoms of the present disclosure can extend from a lower limit to an upper limit, for example, $C_1$-$C_8$ refers to a number of the carbon atom(s) of 1, 2, 3, 4, 5, 6, 7, or 8.

In some embodiments, the compound of the phosphazene derivative having the structure of Formula (I) of the present disclosure is selected from Table 1, but not limited thereto. The compound of formula 1-4 is outside the scope of the claims.

Table 1:

| | |
|---|---|
| Compound of Formula 1-1 | 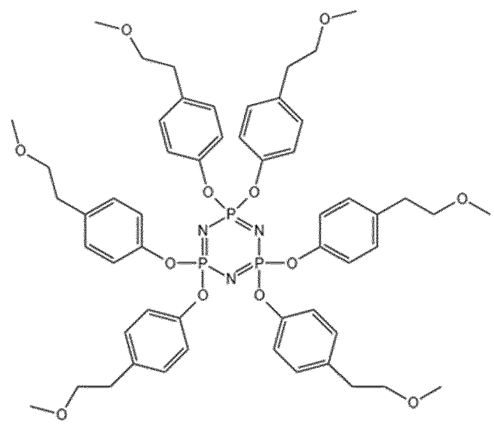 |
| Compound of Formula 1-2 | 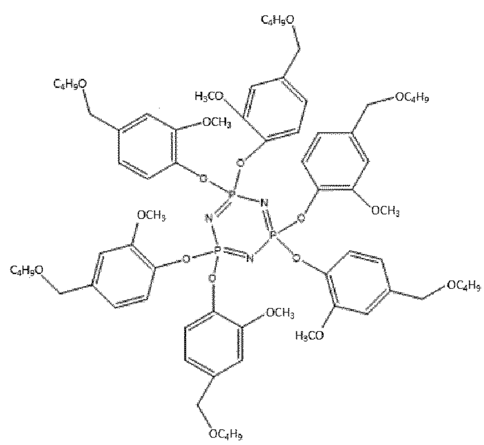 |

(continued)

| | |
|---|---|
| Compound of Formula 1-3 | 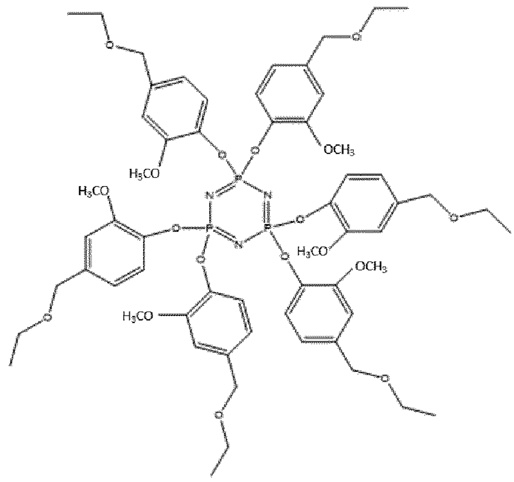 |
| Compound of Formula 1-4 (not claimed) | 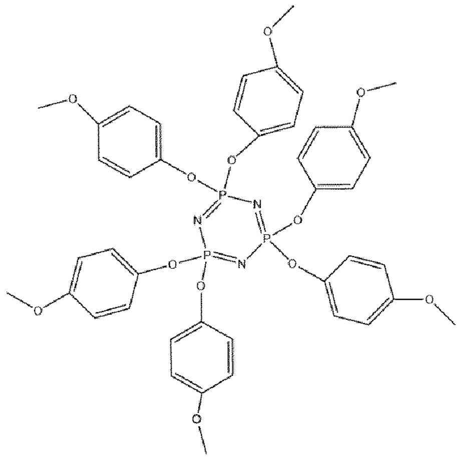 |

In another embodiment, the compound of the phosphazene derivative having the structure of Formula (I) of the present disclosure is preferably the following compound:

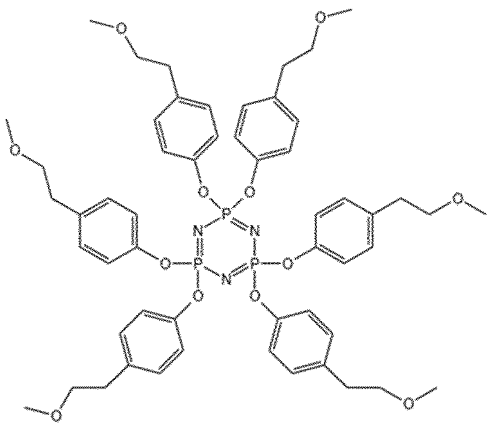

(1-1).

In another embodiment, the present disclosure provides a composition for an electrochemical device, which comprises the novel phosphazene derivative-based additive of the present disclosure. The defect of the electrochemical device of poor safety can be improved by the use of the additive. In one embodiment, the composition of the present disclosure comprises an electrolyte, a non-aqueous solvent and an additive. The additive comprises the phosphazene derivative having the structure of Formula (I) of the present disclosure:

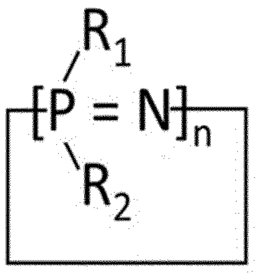

(I),

wherein n is an integer of 3 to 6, $R_1$ and $R_2$ are independently selected from a group represented by Formula (I-1) or Formula (I-2),

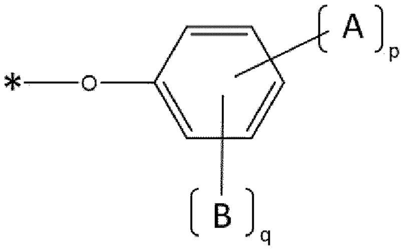

(I-1),

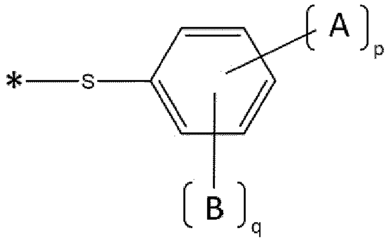

(I-2);

wherein A is $-R_3-O-R_4$, $-R_3-CH_{3-m}(OR_4)_m$, $-CH_{3-m}(OR_4)_m$ or

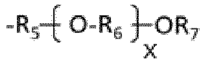

,

$R_3$ is unsubstituted $C_1$-$C_8$ alkylene or $C_1$-$C_8$ alkylene substituted with $C_1$-$C_8$ alkyl, $R_4$ is $C_1$-$C_8$ alkyl, $R_5$ is $C_1$-$C_3$ alkyl, $R_6$ is $C_1$-$C_3$ alkylene, $R_7$ is $C_1$-$C_3$ alkyl, x is 1 or 2, m is 2 or 3, p is a number of the A bonded to a carbon in a benzene ring to which the A is attached, and p is an integer of 1 to 3;

B is $C_1$-$C_8$ alkoxy or $C_1$-$C_8$ alkyl, and q is an integer of 0 to 3; and

$0 < p + q \leq 5$.

In one embodiment, a range of the number of carbon atoms of the present disclosure can extend from a lower limit to an upper limit, for example, $C_1$-$C_8$ refers to a number of carbon atoms of 1, 2, 3, 4, 5, 6, 7, or 8.

In one embodiment, the phosphazene derivative having the structure of Formula (I) contained in the additive of the composition of the present disclosure is selected from Table 1 aforementioned, but not limited thereto.

In another embodiment, the phosphazene derivative having the structure of Formula (I) contained in the additive of the composition of the present disclosure is preferably the following compound:

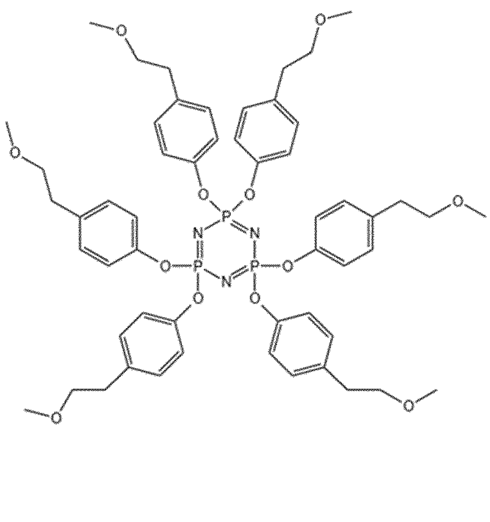

(1-1).

**In** the composition of the present disclosure, the contents of each component can vary depending on the actual application and is not limited to the contents described herein.

**In** one embodiment, the amount of the electrolyte contained in the composition of the present application is about 9.95 to 19.95 wt.%, e.g., 9.95, 10.0, 11.0, 12.0, 13.0, 14.0, 15.0, 16.0, 17.0, 18.0, 19.0 or 19.95 wt.%, based on the total weight of the composition.

**In** one embodiment, the amount of the additive contained in the composition of the present application is about 0.05 to 20.0 wt.%, e.g., 0.05, 0.1, 0.2, 0.3, 0.4, 0.5, 0.6, 0.7, 0.8, 0.9, 1.0, 2.0, 3.0, 4.0, 5.0, 6.0, 7.0, 8.0, 9.0, 10.0, 11.0, 12.0, 13.0, 14.0, 15.0, 16.0, 17.0, 18.0, 19.0 or 20.0 wt.%, based on the total weight of the composition.

**In** the composition of the present disclosure, the content of the non-aqueous solvent can vary corresponding to changes in the contents of other components in the composition, provided that the total amount of the non-aqueous solvent and the other components in the composition is 100 wt.% That is, one of the uses of the non-aqueous solvent is to complement the composition to 100 wt.%. **In** one embodiment, the non-aqueous solvent contained in the composition of the present disclosure is at an amount of about 65.0 to 90.0 wt.%, e.g., 65, 66, 67, 68, 69, 70, 71, 72, 73, 74, 75, 76, 77, 78, 79, 80, 81, 82, 83, 84, 85, 86, 87, 88, 89 or 90 wt.%. **In** one embodiment, the composition of the present disclosure contains the non-aqueous solvent at an amount of about 80.0 to 90.0 wt.%.

The electrolytes suitable for the present disclosure are those commonly used in the art. In one embodiment of the composition of the present disclosure, the electrolyte comprises at least one selected from the group consisting of lithium hexafluorophosphate ($LiPF_6$), lithium fluoroborate ($LiBF_4$), lithium bis(trifluoromethanesulfonyl)imide ($LiN(CF_3SO_2)_2$), and lithium trifluoromethanesulfonate ($LiCF_3SO_3$).

The non-aqueous solvent in the composition of the present disclosure can be in a liquid or non- liquid form such as solid or gel, but not limited thereto.

In one embodiment of the non-aqueous solvents in the liquid form, those commonly used in the art can be selected, such as at least one selected from the group consisting of carbonates (e.g., ethylene carbonate, propylene carbonate, dimethyl carbonate, diethyl carbonate, or methylethyl carbonate), furans (e.g., tetrahydrofuran), ethers (e.g., diethyl ether), sulfides (e.g., methyl-sulfolane) and nitriles (e.g., acetonitrile, propionitrile). In one embodiment of the composition of the present disclosure, the non-aqueous solvent comprises at least one selected from the group consisting of carbonates, furans, ethers, sulfides and nitriles.

In one embodiment, the non-aqueous solvents in the non-liquid form can be a polymer compound, e.g., at least one selected from the group consisting of ether-based polymers (e.g., polyethyleneoxide or a cross-linked product thereof), polymethacrylate-based polymers, polyacrylate-based polymers, fluoropolymers (e.g., polyvinylidene fluoride (PVDF) and vinylidene fluoride-hexafluoro propylene polymer). In one embodiment of the composition of the present disclosure, the non-aqueous solvent comprises at least one selected from the group consisting of ether-based polymers, polymethacrylate-based polymers, polyacrylated polymers, and fluoropolymers.

The composition of the present disclosure can be obtained either by dissolving the aforementioned electrolyte and the phosphazene derivative-based additive of the present disclosure in a liquid non-aqueous solvent described above or by dissolving the electrolyte and the phosphazene derivative-based additive in liquid non-aqueous solvents, respectively, followed by mixing. If the used non-aqueous solvent is solid, the electrolyte, the phosphazene derivative-based additive and the solid non-aqueous solvent are first dissolved with organic solvents (e.g., alkanes, ketones, aldehydes, alcohols, ethers, benzene, toluene, xylene, kerosene, or the combination thereof), mixed thoroughly, and heated to evaporate the organic solvents to yield the composition of the present disclosure.

In another embodiment, the electrochemical device different from the conventional devices is provided by applying the aforementioned composition therein. In other words, the present disclosure also provides an electrochemical device, comprising an anode, a cathode, and the composition of the present disclosure configured between the anode and the cathode.

In one embodiment, the electrochemical device of the present disclosure is a lithium-ion secondary battery.

EXAMPLES

Various properties and efficacies will be illustrated by Examples below. The Examples set forth are used to illustrate the properties of the present disclosure which is not limited to those illustrated in the particular examples.

Preparation Example 1

1. Preparation of the compound of Formula 1-1:

The compound of Formula 1-1 of the present disclosure can be prepared by the following Scheme 1. Specifically, hexachlorophosphazene (1 g, 2.87 mmol, 1 eq) was mixed with acetone (20 mL) to form Solution a; 4-(2-methoxyethyl) phenol (3.94 g, 25.9 mmol, 9 eq) was mixed with acetone (60 mL) to form Solution b. Afterwards, $K_2CO_3$ (3.58 g, 25.9

mmol, 9 eq) was added to the Solution b to form Solution c. The Solution c was poured into the Solution a to perform a condensation and reflux reaction in an oil bath at 70°C for 4 days. After the reaction was completed, the solid was removed, and the solvent was removed by distillation under a reduced pressure to yield a crude product. The crude product was washed with methanol and water repeatedly, and then freezing-dried to yield the compound of Formula 1-1 as a powder. The NMR spectrum of the compound of Formula 1-1 was shown in FIG. 1A.

Synthesis scheme 1

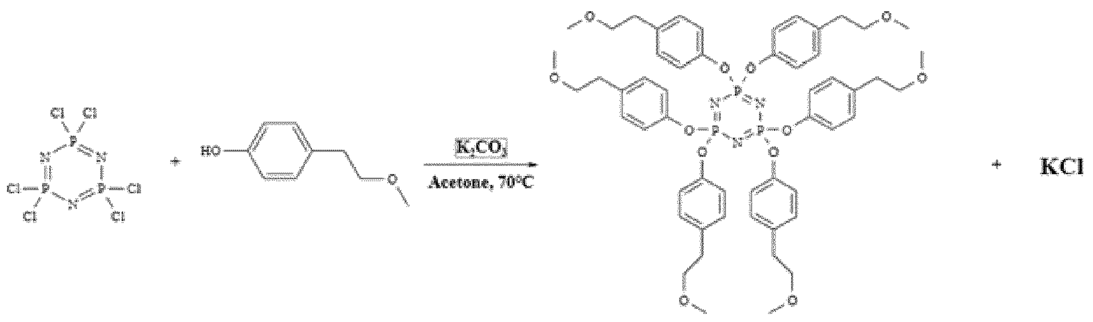


Formula 1-1

2. Preparation of the composition for the electrochemical device

Ethylene carbonate (EC) was dissolved in diethyl carbonate (DEC) or dimethyl carbonate (DMC) at an equal weight ratio, to give a mixed solution of EC:DEC:DMC (1:1:1) or EC:DEC (1:1). Thereafter, 11.8 wt.% of $LiPF_6$ electrolyte was added to the mixed solution aforementioned, after calculated based on the weight molar concentration. Finally, 5 wt.% or 7 wt.% of the additive (compound of Formula 1-1 prepared by the method described) was added and stirred to mix thoroughly, thereby forming the composition for the electrochemical device.

Preparation Examples 2-4

1. Preparation of the compounds of Formula 1-2 to Formula 1-4:

The compounds were prepared by the same procedures described in the preparation of the compound of Formula 1-1 in the Preparation Example 1, except that 4-(2-methoxyethyl)phenol is replaced with vanillyl butyl ether, vanillyl ethyl ether and 4-methoxyphenol), respectively, to prepare each compound of Formula 1-2, Formula 1-3, and Formula 1-4. The NMR spectra of the compounds of Formula 1-2 to Formula 1-4 were shown in FIGs. 1B-1D, respectively.

Example 1: Fire-retarding tests on electrolytes

Fire-retarding tests were performed as below by using the compound of Formula 1-1 obtained in Preparative Example 1 in the electrolyte:

1. The compound of Formula 1-1 and the commercially available fire retardant PFPN (pentafluoroethoxycyclotriphosphazene) were dissolved in the commercially available electrolyte (EC: DEC =1:1; 1M $LiPF_6$) at the amounts of 0 and 5 wt.%, respectively, to form electrolytes to be tested.
2. 10 ml of each electrolyte to be tested was taken into a 20 ml sample bottle. A fiberglass cloth of 4 cm long and 1 cm wide was soaked completely in the electrolyte for 10 sec, and then was removed and fixed at one end on the tube rack with the binder clip.
3. The fiberglass cloth was brought into contact with a fixed fire source (from a commercial butane lighter) at the non-fixed end opposite to the fixed end for 3 secs, then the fire source was removed, and the combustion phenomenon was observed until the flame completely extinguished and the combustion duration was recorded. The duration was recorded as the time from removal of the fire source to complete extinguishing (self-extinguishing time).

Results of tests: The results of the fire-retarding tests were summarized in Table 2 below. It can be seen from the addition concentrations and the self-extinguishing times, the compound of Formula 1-1 did have the effect of improving the fire-retarding capability of the electrolyte, with the fire-retarding effect at an amount of 5% being better than that of PFPN, a

commercially available fire-retardant.

Table 2: Results of the fire-retarding tests on electrolytes

| Sample | (wt.%) | |
|---|---|---|
| | 0 | 5 |
| | Self-extinguishing time | |
| Fiberglass cloth | 0 s | - |
| Electrolyte (blank reagent) | 24 s | - |
| Electrolyte + PFPN | - | 29 s |
| Electrolyte + compound of Formula 1-1 | - | 19 s |

Example 2: Cycle life Tests on $LiFePO_4$ coin cells

1. Battery assembling:

Coin cells were assembled by using $LiFePO_4$ as the cathode, lithium as the anode, and a commercial separator (Celgard® 2325) and an electrolyte (1 M LiPF6 in EC/DEC (1:1)).

2. 1C cycle life tests:

Coin cells were charged and discharged by repeating (1) charging to 4.0V with 1C constant current and (2) discharging to 2.5V under the discharge condition of 1C constant current by using an electrolyte without the addition (0%, as a control group) or with the addition of 5%, 10%, 15% and 20% of the compound of Formula 1-1, under an environmental temperature of 25°C, and the degradation of capacitance in the first 250 cycles was recorded (Charge Discharge Test Instrument: Actech Systems BAT-750B). The results of the tests were shown in FIGs. 2A-2E, it can be seen that neither the addition nor the addition amount of the compound of Formula 1-1 showed an obvious effect on the cycle life of the battery within 250 cycles. Electric capacities during the first 5 cycles and the last 5 cycles as well as the electric capacity retention rates in the 250 cycles tests were recorded in Table 3 below, with different addition ratio of the compound of Formula 1-1.

Table 3: Electric capacities during the first/last 5 cycles as well as the electric capacity retention rates in the 250 cycles tests with different addition ratio of the compound of Formula 1-1 (wherein 1 mAhlg = 3.6 C/g)

| Content of the compound of Formula 1-1 (%) | 0 | 5 | 10 | 15 | 20 |
|---|---|---|---|---|---|
| Electric capacity during the first 5 cycles (mAh/g) | 144.6±0. 09 | 144.58±0 .26 | 133.69±0 .64 | 123.89±0. 30 | 130.57±0. 3 |
| Electric capacity during the last 5 cycles (mAh/g) | 145.2±0. 35 | 139.96±0 .24 | 135.42±0 .12 | 119.16±0. 12 | 128.16±0. 11 |
| Electric capacity retention rate (%) | >100 | 96.8 | >100 | 96.2 | 98.2 |

Example 3: Charge-discharge tests at different rates

Charge-discharge tests were performed on the coin cells assembled in Example 2 by using an electrolyte without the addition (0%, as the control group) or with the addition of 5%, 10%, 15% and 20% of the compound of Formula 1-1 aforementioned at an environmental temperature of 25 °C with different rates of 0.1 C, 0.2 C, 0.3 C, 0.5 C and 1 C (charge-discharge tester:Acutech Systems BAT-750B). The results of the tests were shown in FIGs. 3A-3E, it can be seen that there was no obvious difference in the specific capacity at the same charge-discharge rate, regardless of the addition and the addition amount of the compound of Formula 1-1. As examples, the discharge specific electric capacities at the rates of 0.1 C and 1 C with different addition amount of the compound of Formula 1-1 were recorded in Table 4 below.

Table 4: Discharge specific electric capacities at the rates of 0.1 C and 1 C with different addition amounts of the compound of Formula 1-1

| Sample | wt.% | Discharge specific capacity (mAh/g) | |
|---|---|---|---|
| | | 0.1 C | 1 C |
| Compound of Formula 1-1 | 0 | 151.5 | 143.0 |
| | 5 | 152.8 | 144.3 |
| | 10 | 152.4 | 134.8 |
| | 15 | 151.2 | 136.8 |
| | 20 | 154.1 | 133.6 |

Example 4: Performance tests and nail penetration tests on NMC622 lithium ion batteries

The type of batteries in the tests are punch cells employed with the cathode of $LiNi_{0.6}Mn_{0.2}Co_{0.2}O_2$ and the anode of artificial graphite (simplified as NMC622 lithium ion batteries), which were designed as shown in Table 5 below.

Table 5: Designs of NMC622 lithium ion batteries

| | |
|---|---|
| Anode/cathode material | Ni-Mn-Co 622 cathode/artificial graphite anode |
| Compositions of electrolyte | 1M $LiPF_6$ in electrolyte (EC: DEC: DMC=1: 1: 1) |
| Separator | PP 20 um, without coating |
| Battery size | 3.5 ± 0.1 mm * 40 ± 1 mm * 60 ± 1 mm |
| Battery capacity | 1 Ah (energy density of about 220 Wh/kg) |

A punch cell with the addition of 7 wt.% of the compound of Formula 1-1 as the experiment group, and one with no addition of a fire retardant as the control group, were tested for battery performances with a charger/discharger (CT-4008T-5V6A-S1, Neware Technology Co,.Ltd.) (Assayer: Keysight 34972A LXI) and subjected to nail penetration tests. The device for the nail penetration tests was customized by disposing of steel needles and the controller in the metal case and providing temperature and voltage monitors outside the case, with the sensing wiring inserted into the device. The nail penetration tests complied with the specifications for needle diameter and nail penetrating rate in standards such as IEC60086-4:2000, UL1642-2007, and UL2054. Cells were test for performance in steps shown in Table 6 below; and the parameters for nail penetration tests were shown in Table 7 below.

Table 6: Steps for testing performance of batteries

| | |
|---|---|
| 1 | Charging to 4.25V with 1C constant current |
| 2 | Charging with 1C constant voltage to a current cutoff of 0.175A |
| 3 | Resting for 2 minutes |
| 4 | Discharging to 2.8V with 1C constant current |
| 5 | Resting for 2 minutes and repeating the steps aforementioned |

Table 7: Parameters for nail penetration test

| | |
|---|---|
| Needle diameter | 3 mm |
| Nail penetrating rate | 4.2 cm/s |
| Initial height | 24.5 cm |

The results from the battery performance test and the nail penetration test were shown in Table 8 below and FIGs. 4A and 4B. It was observed in the nail penetration test, for cells in the experiment group with the addition of the compound of Formula 1-1, no fire or smoke was seen, the surface temperature was maintained at 30°C without evident increase, and there was no significant change in voltage of the cells; in contrast, fire and smoke were observed in the control group

without the addition of any additive with a dramatic increase in surface temperature and reduction in the voltage to 0V. Changes in voltage and temperature of the experiment and control groups were shown in FIGs. 4A and 4B. It can be seen from the results presented above, the safety of battery containing the electrolyte formulated with the compound of Formula 1-1 of the present disclosure was improved in view of the results from the nail penetration test for battery safety relative to those containing the electrolyte without any additive.

Table 8: The electronic properties of 1Ah punch cells and the results of nail penetration

| | Additive (%) | Charging voltage (V) | Median voltage (V) | Factional capacity (mAh) | Inner resistance of product (mΩ) | Results of nail penetration |
|---|---|---|---|---|---|---|
| Control group | ----- | 4.25 | 3.64 | 1100.9 | 22.4 | Dramatic rise in temperature, firing, burning, dropping to zero in voltage |
| Experiment group | 7 wt.% of the compound of Formula 1-1 | 4.25 | 3.64 | 1104.4 | 25.7 | No observation of burning, no significant changes in temperature, voltage, appearance |

It can be seen from the examples above, by using the phosphazene derivative of the present disclosure as the additive to the electrolyte of a lithium-ion battery, in addition to no significant effect on the performance of the battery, the fire retardance effect better than PFPN, a commercially available fire retardant, can be achieved, and the safety of the battery upon external damages can be significantly enhanced. Therefore, the phosphazene derivative of the present disclosure is an inventive substance having excellent efficacies and can be utilized broadly.

**Claims**

1. A phosphazene derivative having a structure of Formula (I):

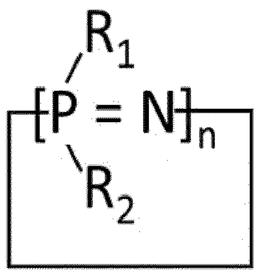

(I);

wherein n is an integer of 3 to 6, $R_1$ and $R_2$ are independently selected from a group represented by Formula (I-1) or Formula (I-2),

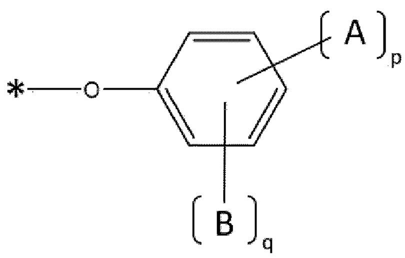

(I-1),

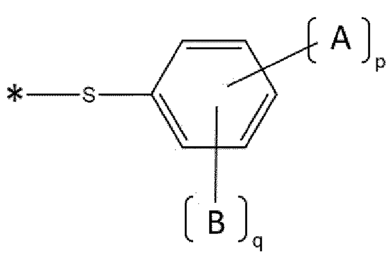

(I-2);

wherein A is $-R_3-O-R_4$, $-R_3-CH_{3-m}(OR_4)_m$, $-CH_{3-m}(OR_4)_m$ or

$$-R_5\left[O-R_6\right]_x OR_7$$ ,

wherein $R_3$ is unsubstituted $C_1$-$C_8$ alkylene or $C_1$-$C_8$ alkylene substituted with $C_1$-$C_8$ alkyl, $R_4$ is $C_1$-$C_8$ alkyl, $R_5$ is $C_1$-$C_3$ alkyl, $R_6$ is $C_1$-$C_3$ alkylene, $R_7$ is $C_1$-$C_3$ alkyl, x is 1 or 2, m is 2 or 3, p is a number of the A bonded to a carbon in a benzene ring to which the A is attached, and p is an integer of 1 to 3;
B is $C_1$-$C_8$ alkoxy or $C_1$-$C_8$ alkyl, and q is an integer of 0 to 3; and
$0 < p + q \leq 5$.

**2.** The phosphazene derivative of claim 1, wherein $R_1$ and $R_2$ are groups represented by Formula (I-1), A is $-R_3$-O-$R_4$, $R_3$ is $C_1$-$C_8$ alkylene, $R_4$ is $C_1$-$C_8$ alkyl, and p is 1; B is $C_1$-$C_8$ alkoxy, and q is 0 or 1; and $0 < p + q \leq 2$.

**3.** The phosphazene derivative of claim 2, which is one selected from the group consisting of compounds (1-1) to (1-3) below:

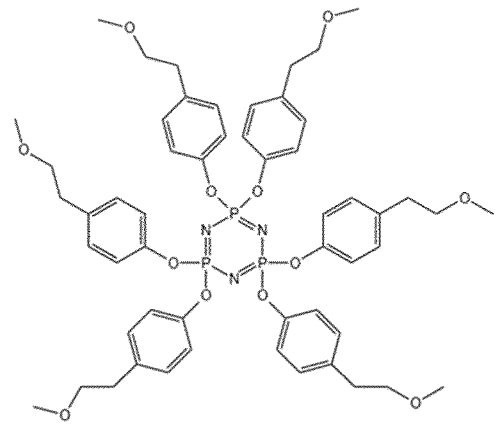

(1-1);

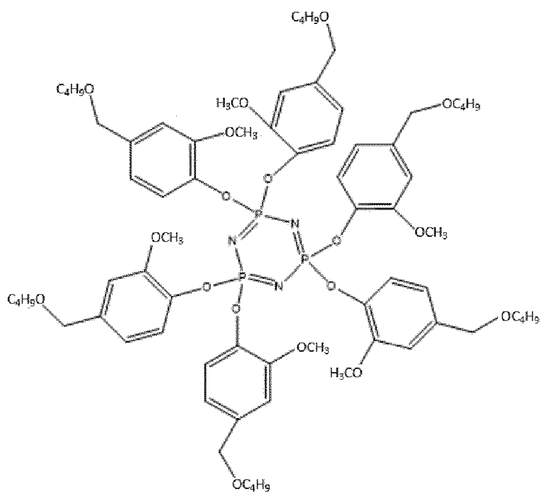

(1-2);

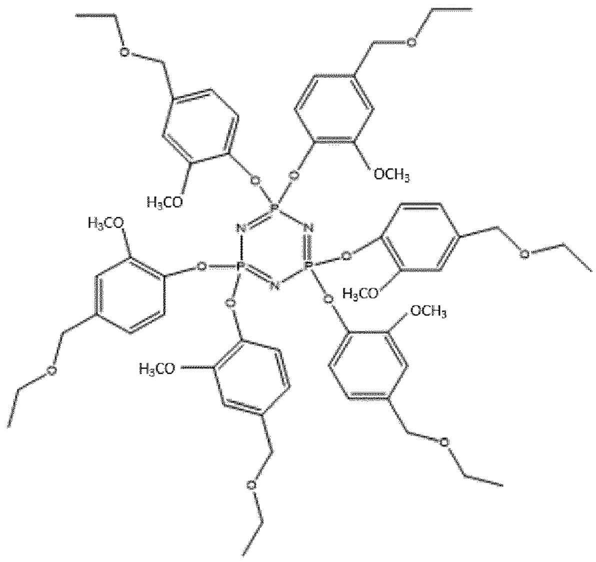

(1-3).

**4.** A composition for an electrochemical device, comprising an electrolyte, a non-aqueous solvent and an additive, wherein the additive comprises the phosphazene derivative according to claim 1.

**5.** The composition of claim 4, wherein $R_1$ and $R_2$ are groups represented by Formula (I-1), A is $-R_3-O-R_4$, $R_3$ is $C_1-C_8$ alkylene, $R_4$ is $C_1-C_8$ alkyl, and p is 1; B is $C_1-C_8$ alkoxy, and q is 0 or 1; and $0 < p + q \leq 2$.

**6.** The composition of claim 5, which is one selected from the group consisting of compounds (1-1) to (1-3) below:

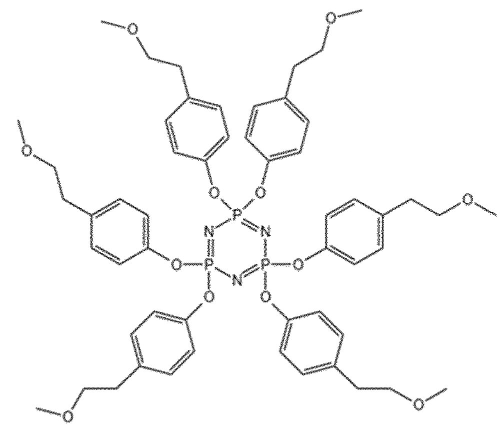

(1-1);

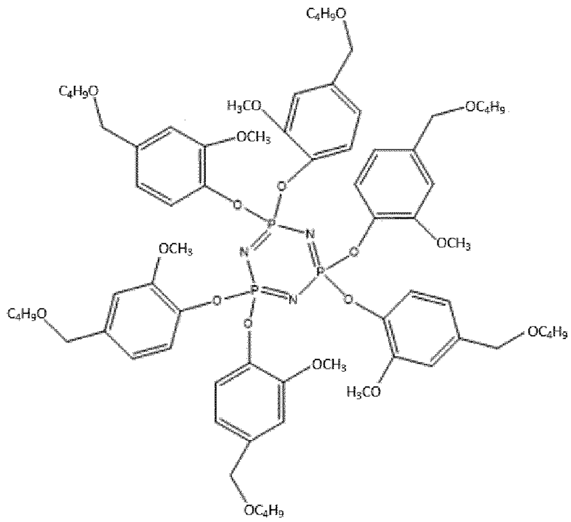

(1-2);

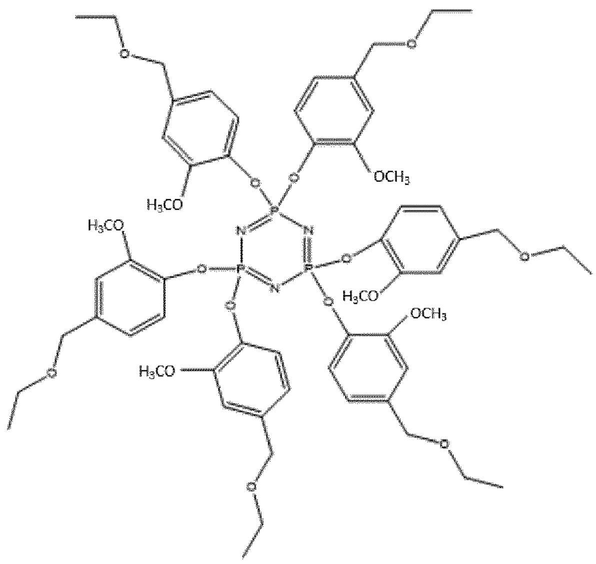

(1-3).

**7.** The composition of claim 4, wherein the electrolyte is present at an amount of 9.95 to 19.95 wt.%, based on a total weight of the composition.

**8.** The composition of claim 4, wherein the additive is present at an amount of 0.05 to 20.0 wt.%, based on a total weight of the composition.

**9.** The composition of claim 4, wherein the electrolyte comprises at least one selected from the group consisting of lithium hexafluorophosphate ($LiPF_6$), lithium fluoroborate ($LiBF_4$), lithium bis(trifluoromethanesulfonyl)imide ($LiN(CF_3SO_2)_2$), and lithium trifluoromethanesulfonate ($LiCF_3SO_3$).

**10.** The composition of claim 4, wherein the non-aqueous solvent comprises at least one selected from the group consisting of carbonates, furans, ethers, sulfides, and nitriles.

**11.** The composition of claim 4, wherein the non-aqueous solvent comprises at least one selected from the group consisting of ether-based polymers, polymethacrylate-based polymers, polyacrylated polymers, and fluoropolymers.

**12.** An electrochemical device, comprising an anode, a cathode, and the composition of claim 4 configured between the anode and the cathode.

**13.** The electrochemical device of claim 12, which is a lithium-ion secondary battery.

**Patentansprüche**

1. Phosphazen-Derivat, das eine Struktur von Formel (I) aufweist:

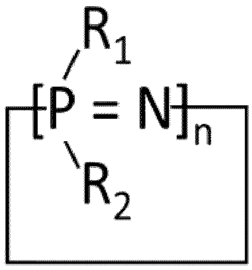

(I);

wobei n eine ganze Zahl von 3 bis 6 ist, $R_1$ und $R_2$ unabhängig aus einer durch Formel (I-1) oder Formel (1-2) dargestellten Gruppe ausgewählt sind,

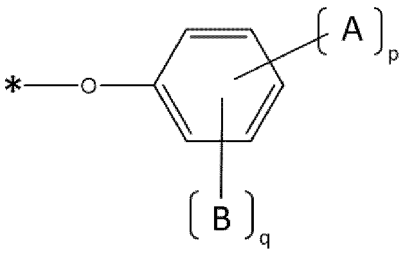

(I-1),

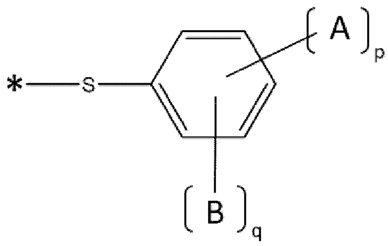

(I-2);

wobei A $-R_3-O-R_4$, $-R_3-CH_{3-m}(OR_4)_m$, $-CH_{3-m}(OR_4)_m$ oder

$$-R_5-\left[O-R_6\right]_X-OR_7$$

ist, wobei $R_3$ unsubstituiertes $C_1$-$C_8$-Alkylen oder mit $C_1$-$C_8$-Alkyl substituiertes $C_1$-$C_8$-Alkylen ist, $R_4$ $C_1$-$C_8$-Alkyl ist, $R_5$ $C_1$-$C_3$-Alkyl ist, $R_6$ $C_1$-$C_3$-Alkylen ist, $R_7$ $C_1$-$C_3$-Alkyl ist, x 1 oder 2 ist, m 2 oder 3 ist, p eine Anzahl der A ist, die an einen Kohlenstoff in einem Benzolring gebunden sind, mit dem das A verknüpft ist, und p eine ganze Zahl von 1 bis 3 ist;
B $C_1$-$C_8$-Alkoxy oder $C_1$-$C_8$-Alkyl ist, und q eine ganze Zahl von 0 bis 3 ist; und

$$0 < p + q \leq 5.$$

2. Phosphazen-Derivat nach Anspruch 1, wobei $R_1$ und $R_2$ durch Formel (I-1) dargestellte Gruppen sind, A $-R_3-O-R_4$ ist, $R_3$ $C_1$-$C_8$-Alkylen ist, $R_4$ $C_1$-$C_8$-Alkyl ist, und p 1 ist; B $C_1$-$C_8$-Alkoxy ist, und q 0 oder 1 ist; und $0 < p + q \leq 2$.

3. Phosphazen-Derivat nach Anspruch 2, welches eines ist, das aus der Gruppe bestehend aus nachstehenden Verbindungen (1-1) bis (1-3) ausgewählt ist:

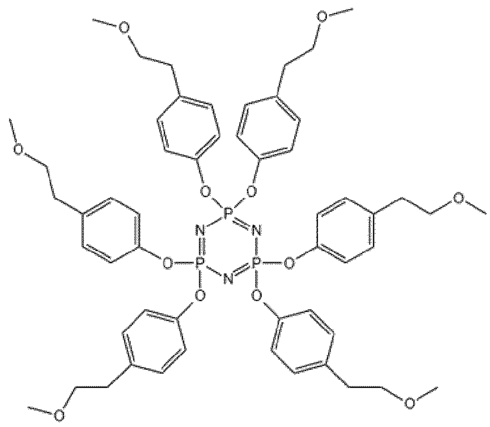

(I-1);

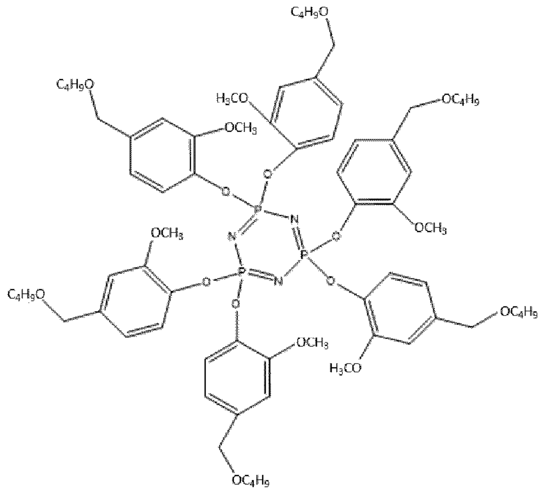

(I-2);

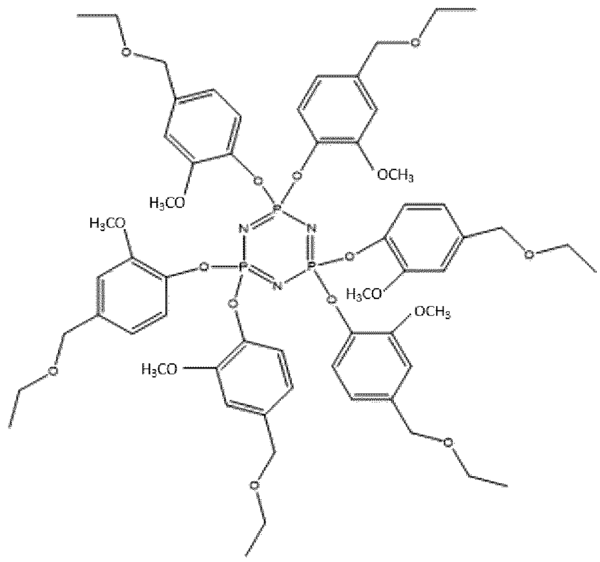

(I-3).

**4.** Zusammensetzung für eine elektrochemische Vorrichtung, umfassend einen Elektrolyten, ein nicht-wässriges Lösungsmittel und ein Additiv, wobei das Additiv das Phosphazen-Derivat nach Anspruch 1 umfasst.

**5.** Zusammensetzung nach Anspruch 4, wobei $R_1$ und $R_2$ durch Formel (I-1) dargestellte Gruppen sind, A $-R_3$-O-$R_4$ ist, $R_3$ $C_1$-$C_8$-Alkylen ist, $R_4$ $C_1$-$C_8$-Alkyl ist, und p 1 ist; B $C_1$-$C_8$-Alkoxy ist, und q 0 oder 1 ist; und $0 < p + q \leq 2$.

6. Zusammensetzung nach Anspruch 5, welche eine ist, die aus der Gruppe bestehend aus nachstehenden Verbindungen (1-1) bis (1-3) ausgewählt ist:

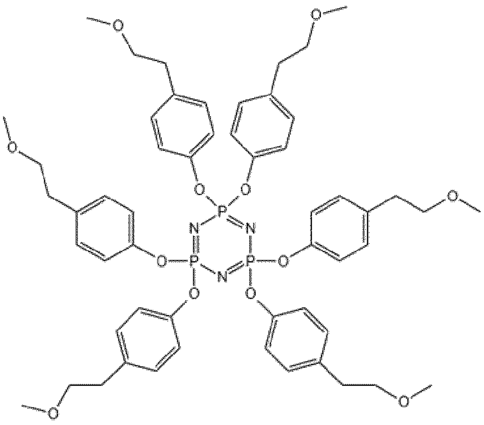

(I-1);

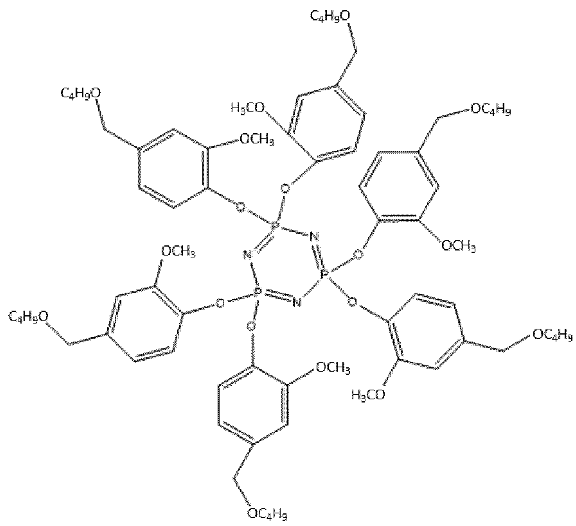

(I-2);

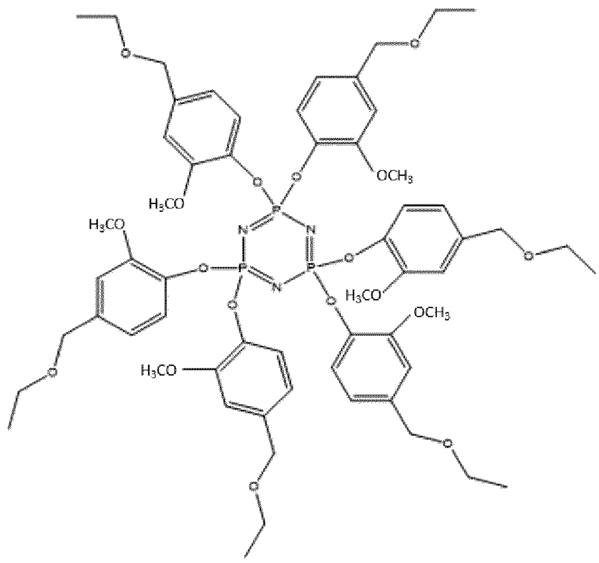

(I-3).

7. Zusammensetzung nach Anspruch 4, wobei der Elektrolyt in einer Menge von 9,95 bis 19,95 Gewichts-% vorhanden

ist, bezogen auf ein Gesamtgewicht der Zusammensetzung.

**8.** Zusammensetzung nach Anspruch 4, wobei das Additiv in einer Menge von 0,05 bis 20 Gewichts-% vorhanden ist, bezogen auf ein Gesamtgewicht der Zusammensetzung.

**9.** Zusammensetzung nach Anspruch 4, wobei der Elektrolyt mindestens eines umfasst, welches ausgewählt ist aus der Gruppe bestehend aus Lithiumhexafluorophosphat ($LiPF_6$), Lithiumfluoroborat ($LiBF_4$), Lithiumbis(trifluormethansulfonyl)imid ($LiN(CF_3SO_2)_2$) und Lithiumtrifluormethansulfonat ($LiCF_3SO_3$).

**10.** Zusammensetzung nach Anspruch 4, wobei das nicht-wässrige Lösungsmittel mindestens eines umfasst, welches ausgewählt ist aus der Gruppe bestehend aus Carbonaten, Furanen, Ethern, Sulfiden und Nitrilen.

**11.** Zusammensetzung nach Anspruch 4, wobei das nicht-wässrige Lösungsmittel mindestens eines umfasst, welches ausgewählt ist aus der Gruppe bestehend aus Ether-basierten Polymeren, Polymethacrylatbasierten Polymeren, polyacrylierten Polymeren und Fluorpolymeren.

**12.** Elektrochemische Vorrichtung, umfassend eine Anode, eine Kathode und die Zusammensetzung nach Anspruch 4, die zwischen der Anode und der Kathode angeordnet ist.

**13.** Elektrochemische Vorrichtung nach Anspruch 12, welche eine Lithium-Ionen-Sekundärbatterie ist.

**Revendications**

**1.** Dérivé de phosphazène ayant une structure selon la formule (I) :

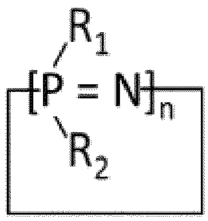

(I);

où n est un nombre entier de 3 à 6, $R_1$ et $R_2$ sont choisis indépendamment dans un groupe représenté par la formule (1-1) ou la formule (1-2)

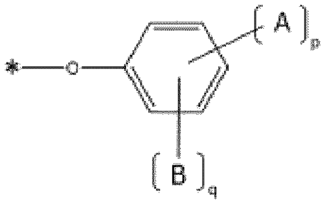

(I-1),

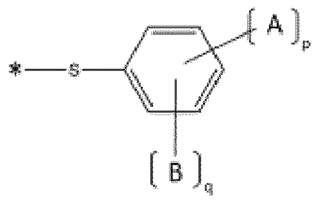

(I-2);

où A est un groupement
$-R_3-O-R_4$, $-R_3-CH_{3-m}(OR_4)_m$, $-CH_{3-m}(OR_4)_m$ ou

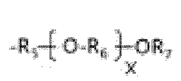

,

où $R_3$ est un groupement alcylène en $C_1$-$C_8$ non substitué ou alcylène en $C_1$-$C_8$ substitué avec un groupement alkyle en $C_1$-$C_8$, $R_4$ est un groupement alkyle en $C_1$-$C_8$, $R_5$ est un groupement alkyle en $C_1$-$C_3$, $R_6$ est un groupement alcylène en $C_1$-$C_3$, $R_7$ est un groupement alkyle en $C_1$-$C_3$, x est égal à 1 ou 2, m est égal à 2 ou 3, p est un nombre de groupements A liés à un atome de carbone dans un cycle benzénique auquel A est fixé, et p est un

nombre entier de1 à 3 ;
B est un groupement alcoxyle en $C_1$-$C_8$ ou un groupement alkyle en $C_1$-$C_8$, et q est un nombre entier de 0 à 3 ; et $0 < p + q \leq 5$.

**2.** Dérivé de phosphazène selon la revendication 1, dans lequel $R_1$ et $R_2$ sont des groupements représentés par la formule (I-1), A est un groupement -$R_3$-O-$R_4$, $R_3$ est un groupement alcylène en $C_1$-$C_8$, $R_4$ est un groupement alkyle en $C_1$-$C_8$, et p est égal à 1 ; B est un groupement alcoxyle en $C_1$-$C_8$ et q est égal à 0 ou 1 ; et $0 < p + q \leq 2$.

**3.** Dérivé de phosphazène selon la revendication 2, qui est choisi dans le groupe constitué des composés (1-1) à (1-3) ci-dessous :

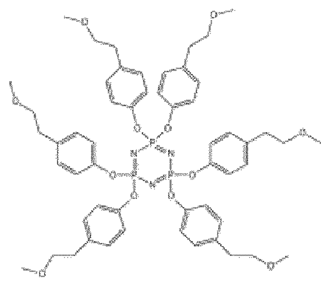

(1-1);

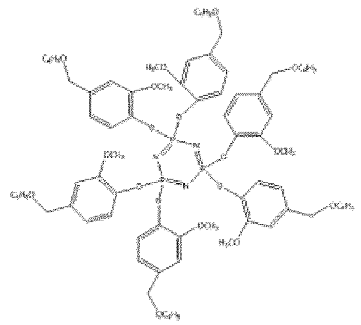

(1-2);

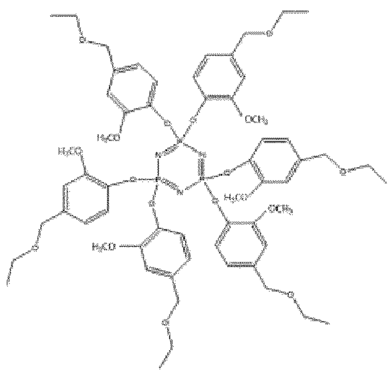

(1-3).

**4.** Composition pour un dispositif électrochimique, comprenant un électrolyte, un solvant non aqueux et un additif, dans laquelle l'additif comprend le dérivé de phosphazène selon la revendication 1.

**5.** Composition selon la revendication 4, dans laquelle $R_1$ et $R_2$ sont des groupements représentés par la formule (I-1), A est un groupement -$R_3$-$OR_4$, $R_3$ est un groupement alcylène en $C_1$-$C_8$, $R_4$ est un groupement alkyle en $C_1$-$C_8$ et p est égal à 1; B est un groupement alcoxyle en $C_1$-$C_8$ et q est égal à 0 ou 1 ; et $0 < p + q \leq 2$.

**6.** Composition selon la revendication 5, qui est choisie dans le groupe constitué des composés (1-1) à (1-3) ci-dessous :

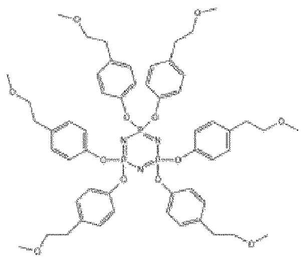

(1-1);

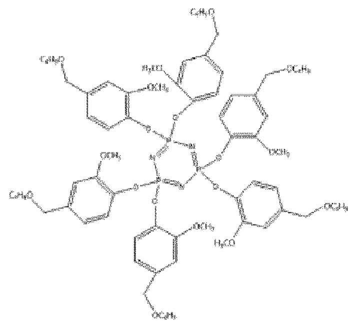

(1-2);

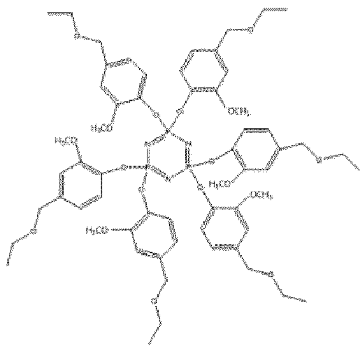

(1-3).

7. Composition selon la revendication 4, dans laquelle l'électrolyte est présent dans une quantité de 9,95 à 19,95 % en poids sur la base d'un poids total de la composition.

8. Composition selon la revendication 4, dans laquelle l'additif est présent dans une quantité de 0,05 à 20,0 % en poids sur la base d'un poids total de la composition.

9. Composition selon la revendication 4, dans laquelle l'électrolyte comprend au moins un composé choisi dans le groupe constitué de l'hexafluorophosphate de lithium ($LiPF_6$), du fluoroborate de lithium ($LiBF_4$), du bis(trifluorométhane sulfonyl) imide de lithium ($LiN(CF_3SO_2)_2$) et du trifluorométhane sulfonate de lithium ($LiCF_3SO_3$).

10. Composition selon la revendication 4, dans laquelle le solvant non aqueux comprend au moins un solvant choisi dans le groupe constitué des carbonates, des furanes, des éthers, des sulfures et des nitriles.

11. Composition selon la revendication 4, dans laquelle le solvant non aqueux comprend au moins un solvant choisi dans le groupe constitué de polymères à base d'éther, de polymères à base de poly méthacrylate, de polymères polyacrylés et de fluoro polymères.

12. Dispositif électrochimique, comprenant une anode, une cathode et une composition selon la revendication 4 mise en place entre l'anode et la cathode.

13. Dispositif électrochimique selon la revendication 12 qui est une batterie secondaire à ion lithium.

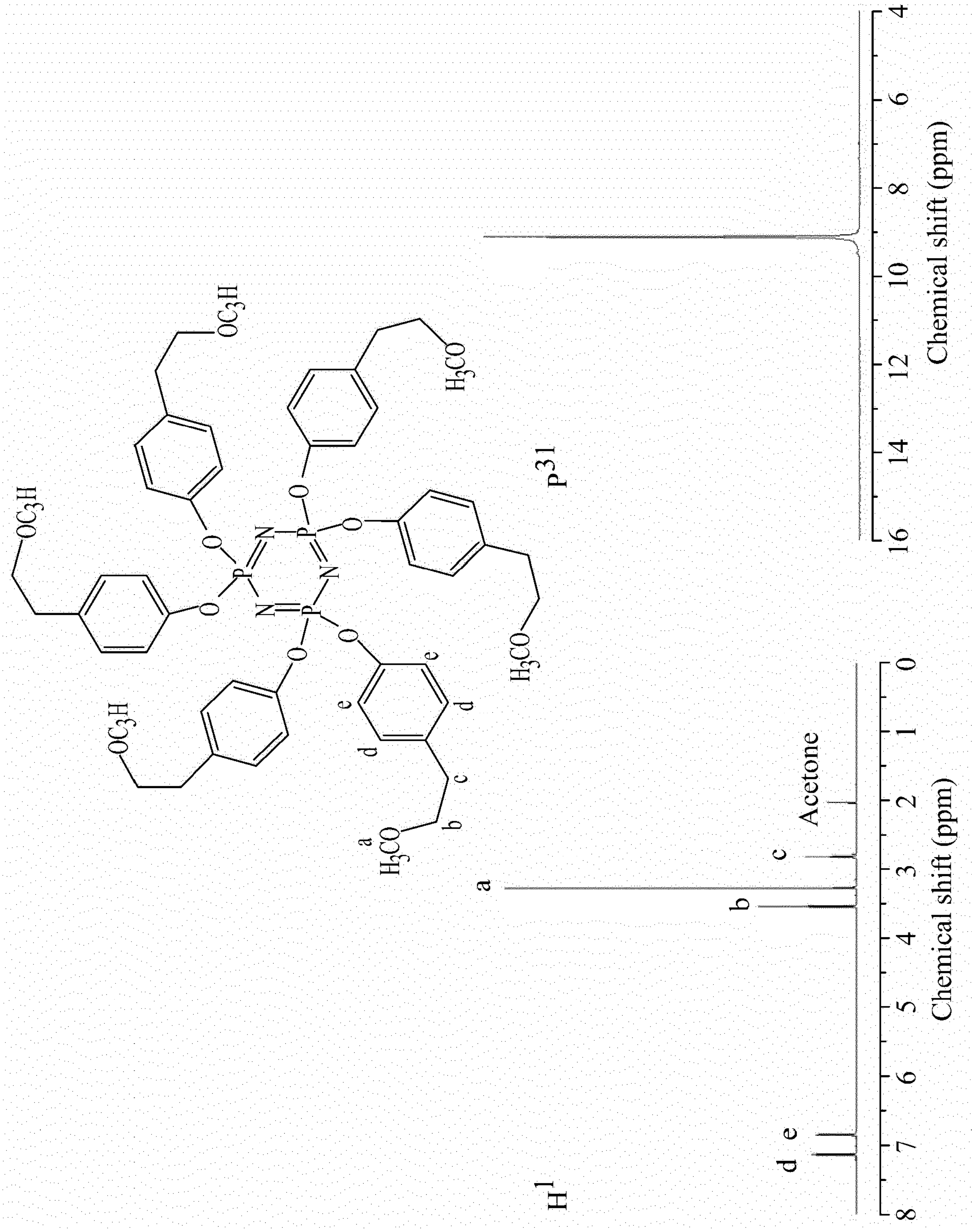


FIG. 1A

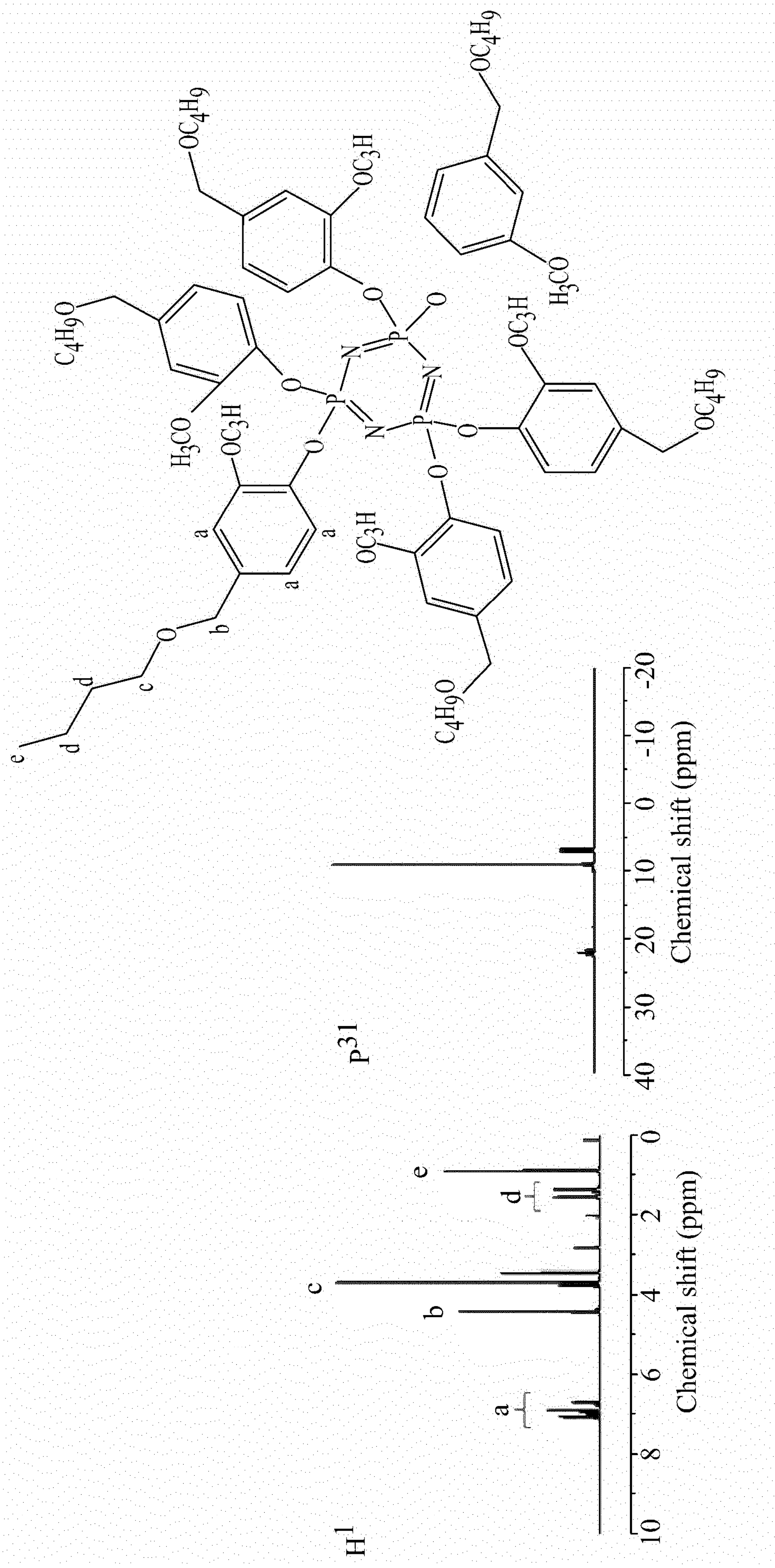


FIG. 1B

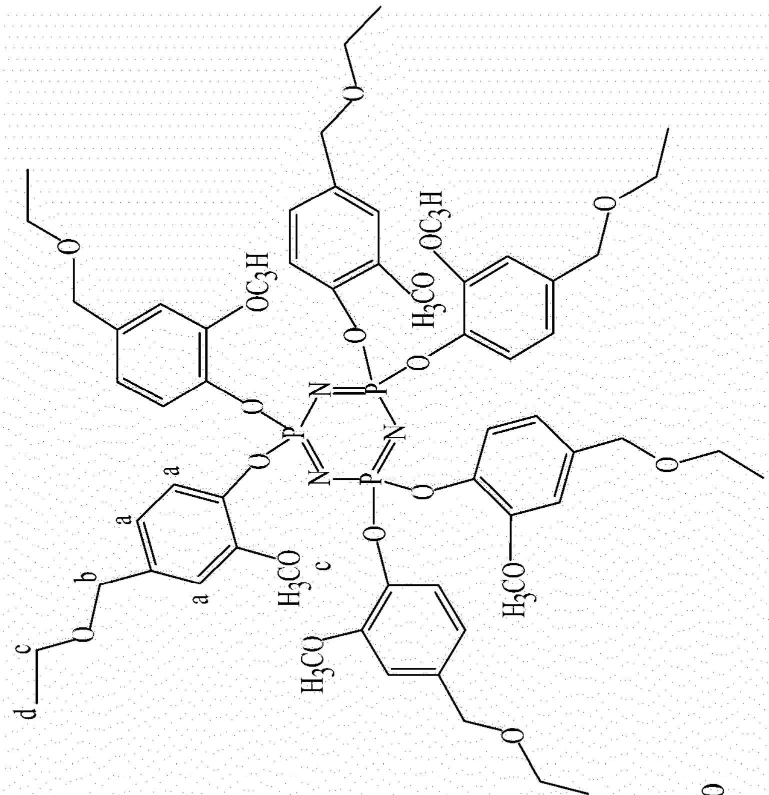

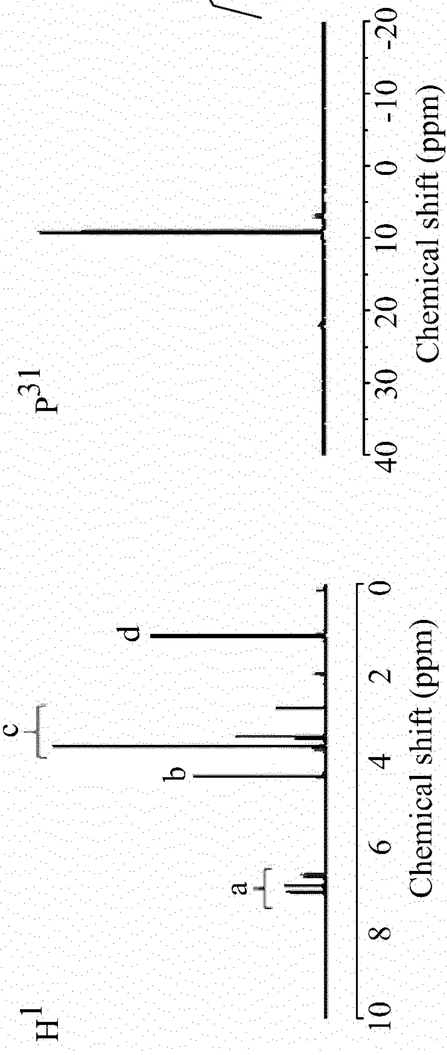
$H^1$
a
b
c
d
10
8
6
4
2
0
Chemical shift (ppm)
$P^{31}$
40
30
20
10
0
-10
-20
Chemical shift (ppm)

FIG. 1C

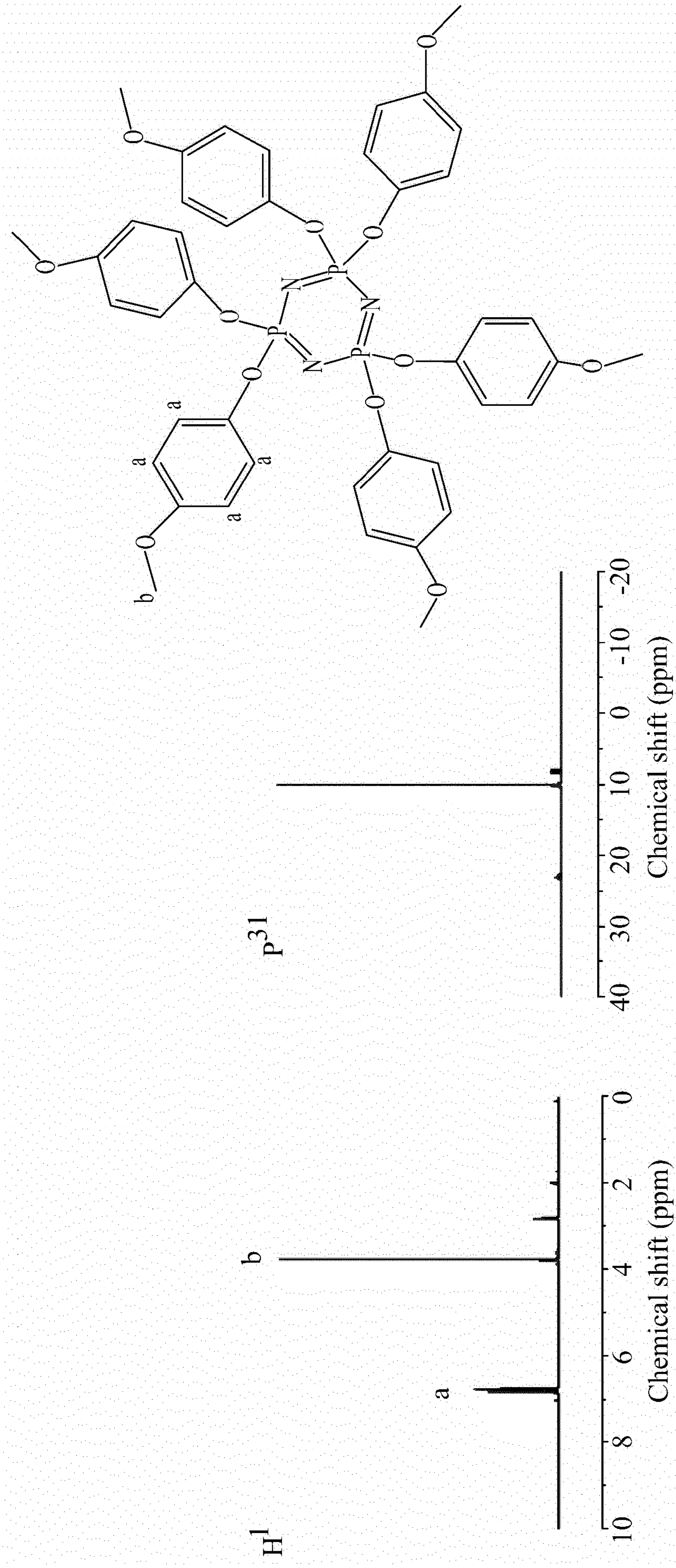


FIG. 1D

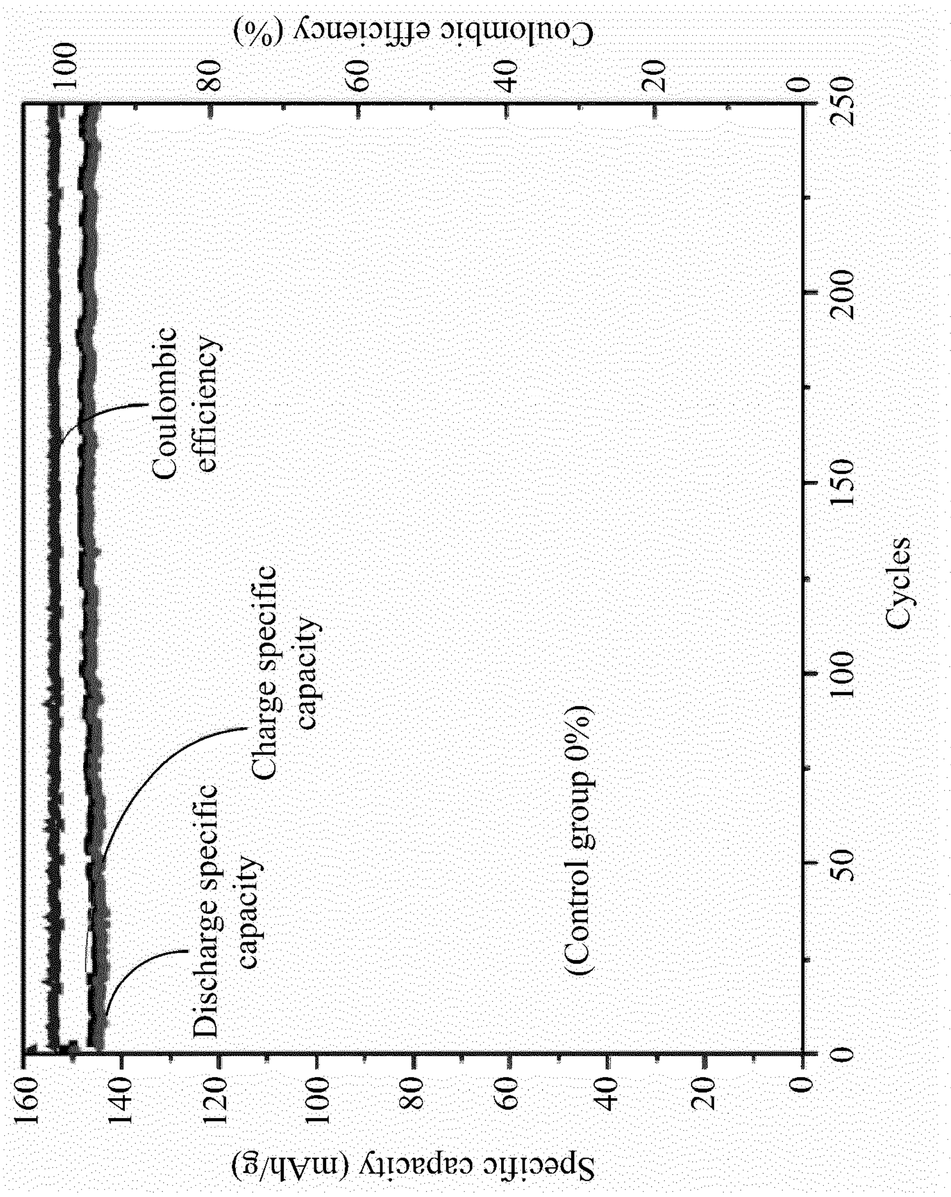
Specific capacity (mAh/g)
Coulombic efficiency (%)
Cycles
Coulombic efficiency
Charge specific capacity
Discharge specific capacity
(Control group 0%)
0
50
100
150
200
250
0
20
40
60
80
100
120
140
160

FIG. 2A

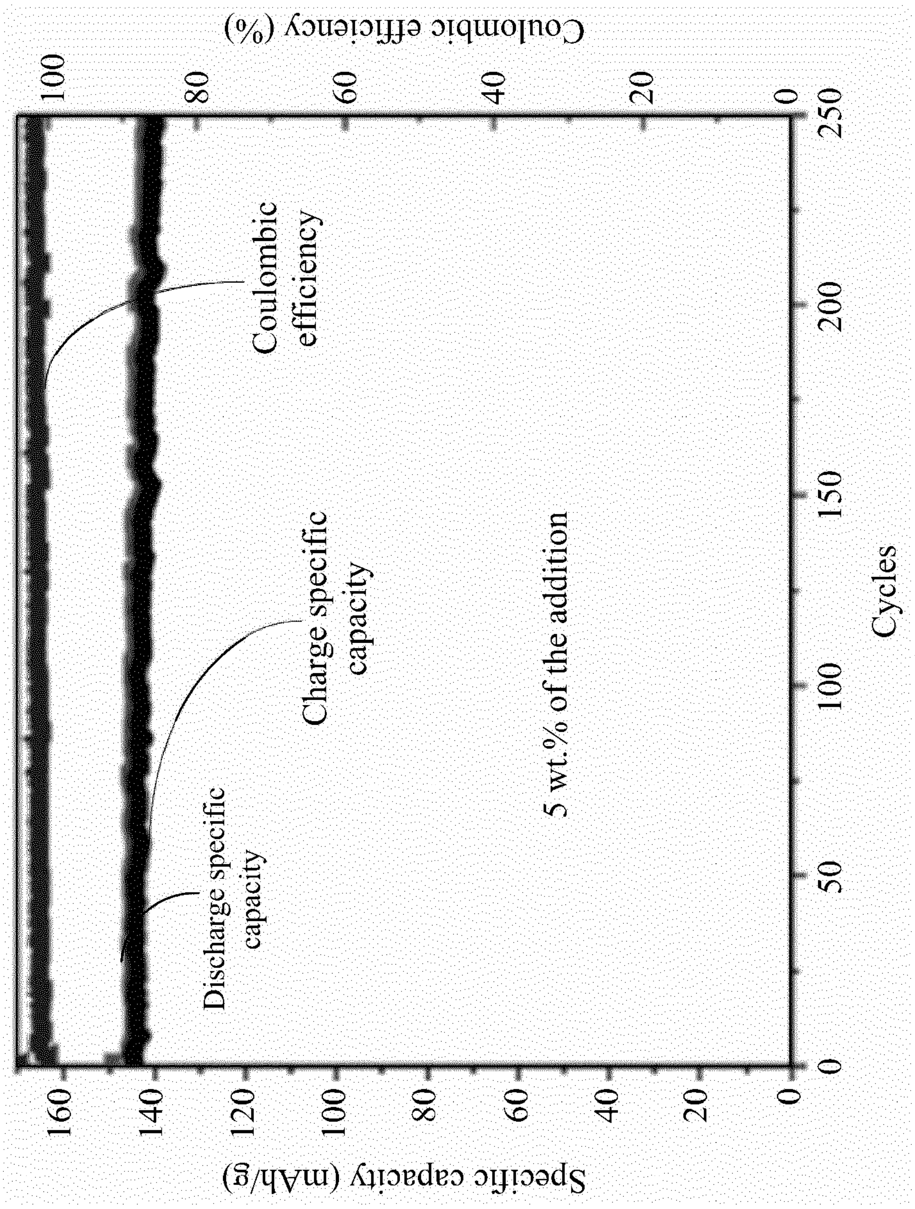
Specific capacity (mAh/g)
Coulombic efficiency (%)
Cycles
Coulombic efficiency
Charge specific capacity
Discharge specific capacity
5 wt.% of the addition
0
20
40
60
80
100
120
140
160
0
50
100
150
200
250
0
20
40
60
80
100

FIG. 2B

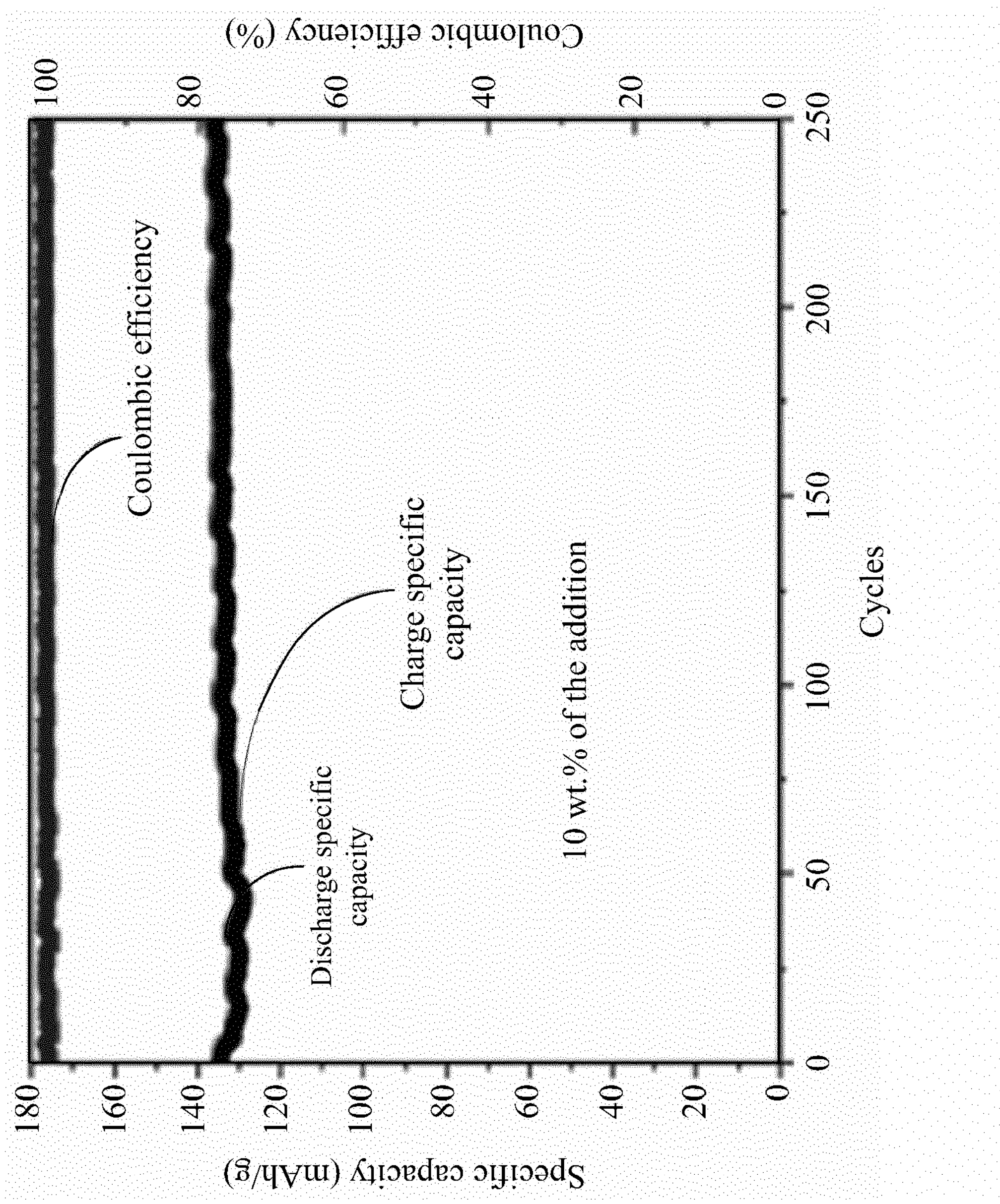
Coulombic efficiency
Charge specific capacity
Discharge specific capacity
10 wt.% of the addition
Specific capacity (mAh/g)
Coulombic efficiency (%)
Cycles
0
20
40
60
80
100
120
140
160
180
50
150
200
250

FIG. 2C

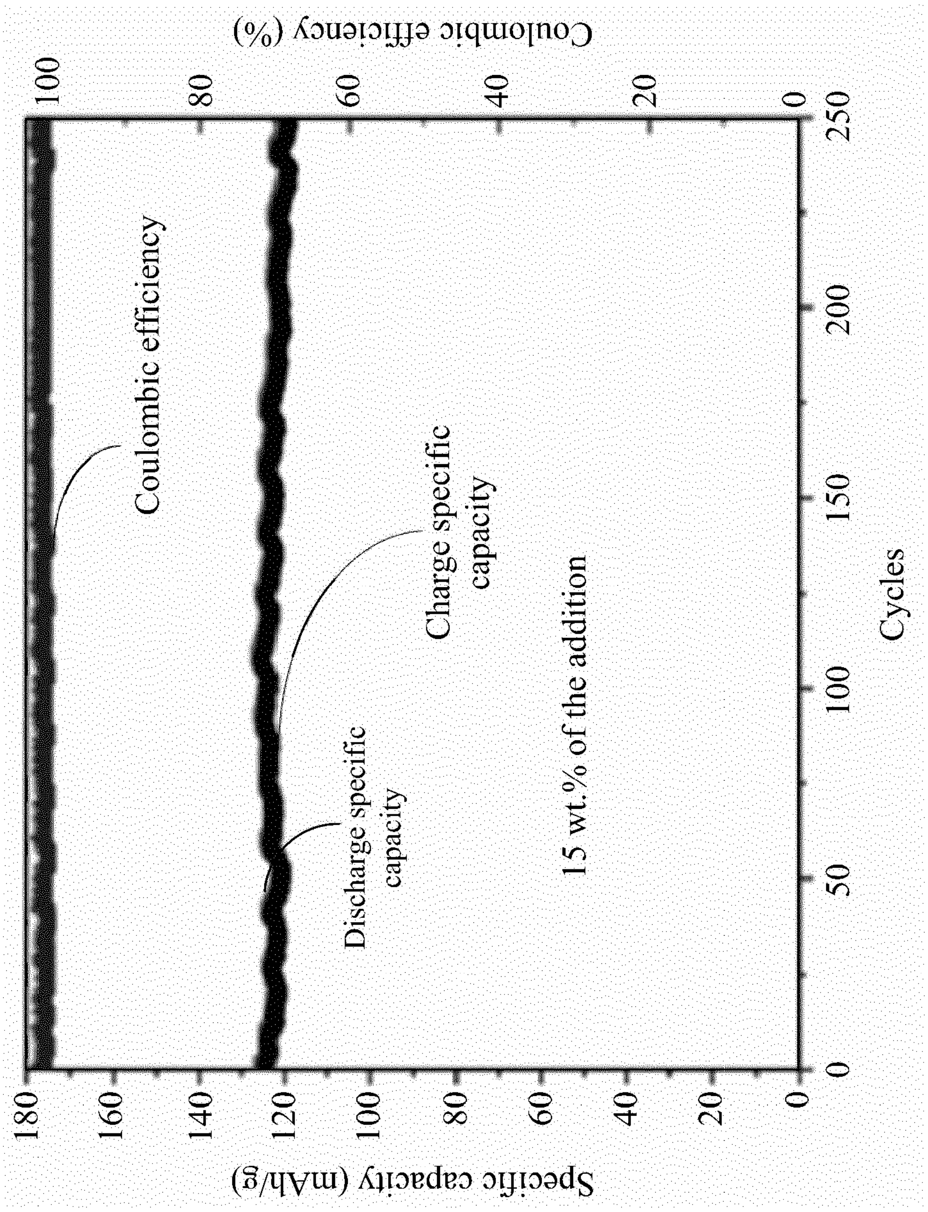
Specific capacity (mAh/g)
180
160
140
120
100
80
60
40
20
0
Coulombic efficiency (%)
100
80
60
40
20
0
Cycles
0
50
100
150
200
250
Coulombic efficiency
Charge specific capacity
Discharge specific capacity
15 wt.% of the addition

FIG. 2D

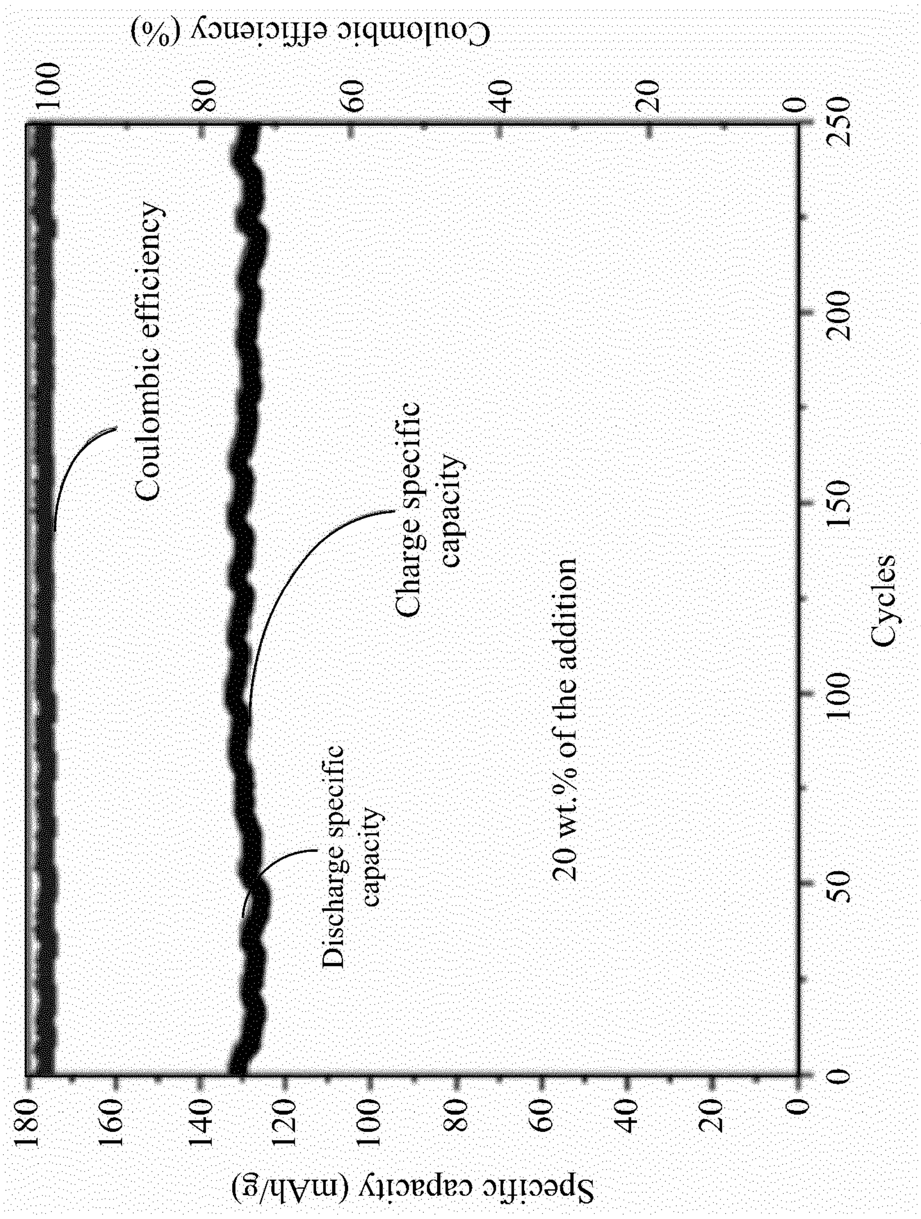
Specific capacity (mAh/g)
Coulombic efficiency (%)
Cycles
Coulombic efficiency
Charge specific capacity
Discharge specific capacity
20 wt.% of the addition
0
20
40
60
80
100
120
140
160
180
0
50
100
150
200
250
0
20
40
60
80
100

FIG. 2E

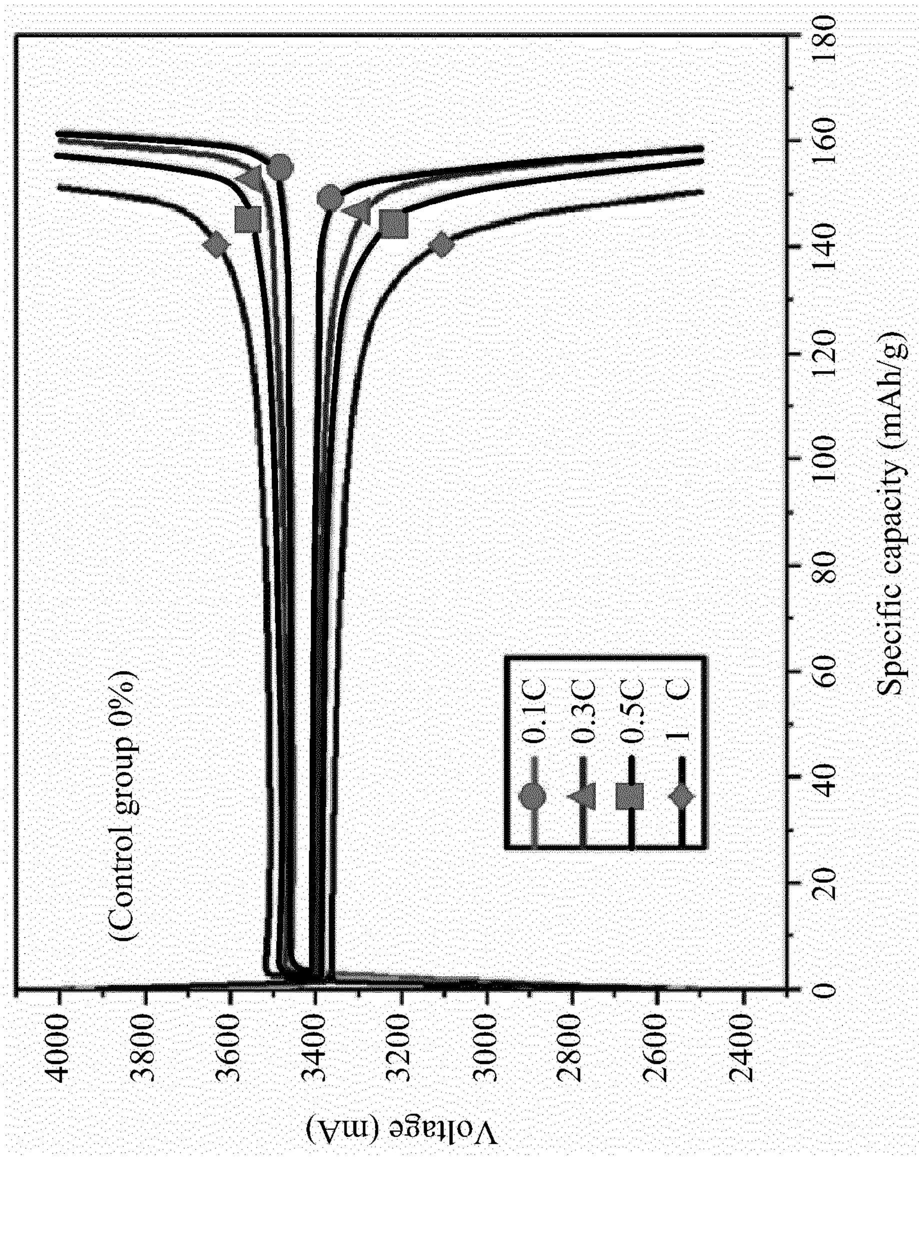
(Control group 0%)
0.1C
0.3C
0.5C
1 C
Voltage (mA)
4000
3800
3600
3400
3200
3000
2800
2600
2400
Specific capacity (mAh/g)
0
20
40
60
80
100
120
140
160
180

FIG. 3A

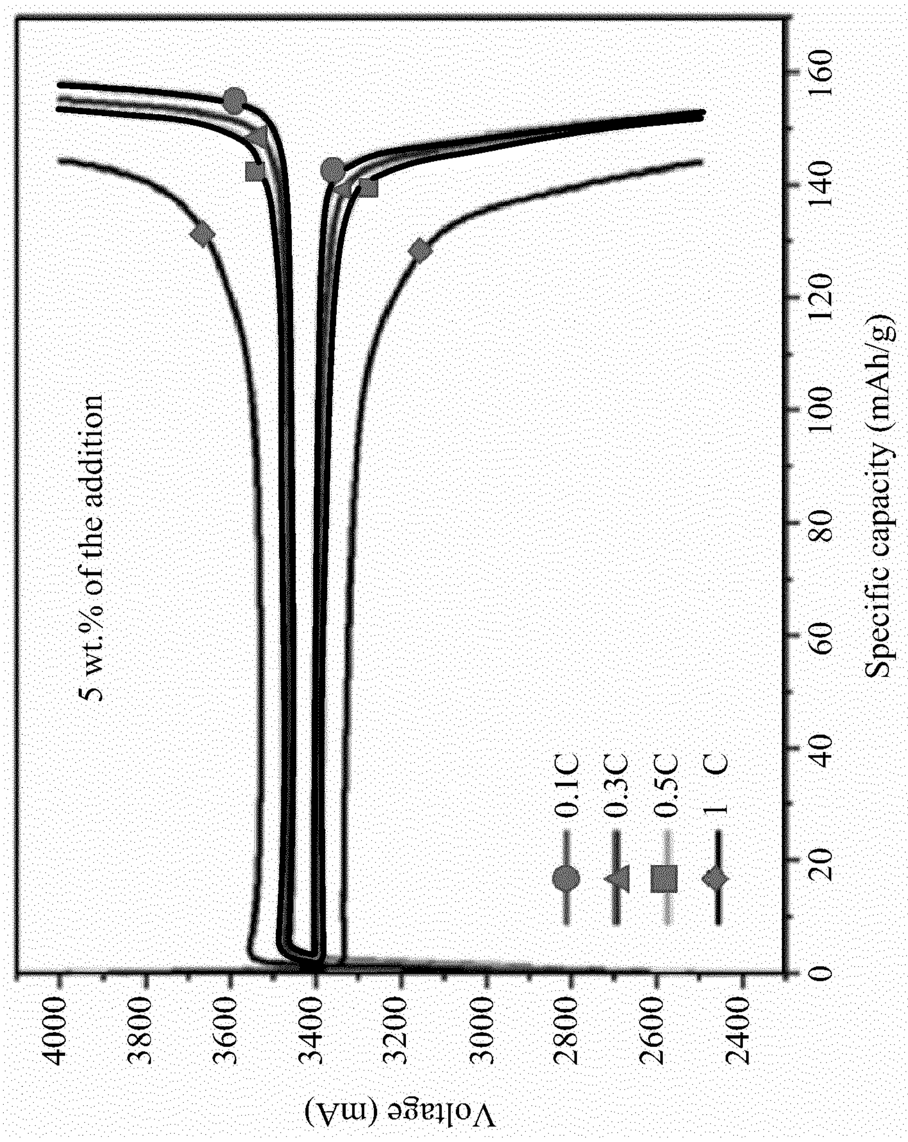

5 wt.% of the addition
0.1C
0.3C
0.5C
1 C
Voltage (mA)
4000
3800
3600
3400
3200
3000
2800
2600
2400
Specific capacity (mAh/g)
0
20
40
60
80
100
120
140
160


FIG. 3B

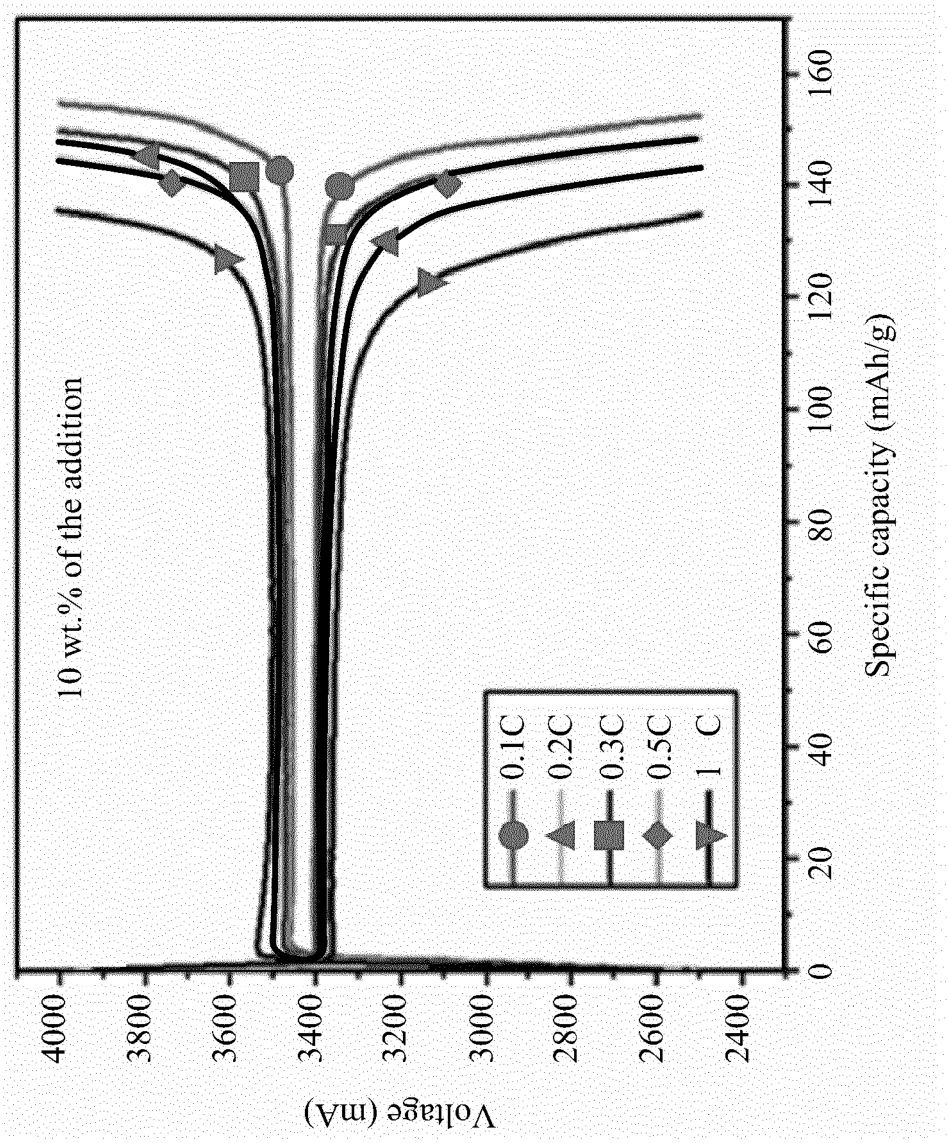
10 wt.% of the addition
0.1C
0.2C
0.3C
0.5C
1 C
Voltage (mA)
4000
3800
3600
3400
3200
3000
2800
2600
2400
0
20
40
60
80
100
120
140
160
Specific capacity (mAh/g)

FIG. 3C

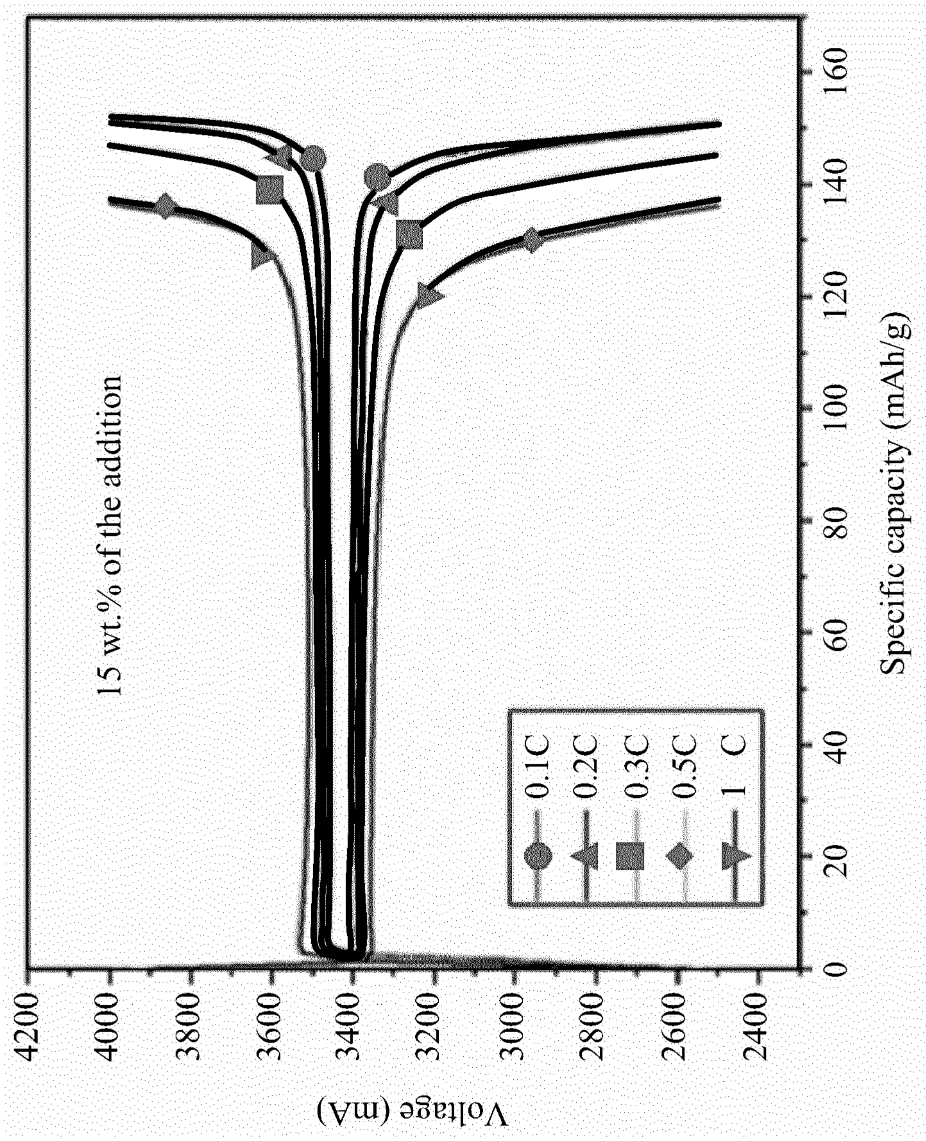
15 wt.% of the addition
0.1C
0.2C
0.3C
0.5C
1 C
Voltage (mA)
4200
4000
3800
3600
3400
3200
3000
2800
2600
2400
Specific capacity (mAh/g)
0
20
40
60
80
100
120
140
160

FIG. 3D

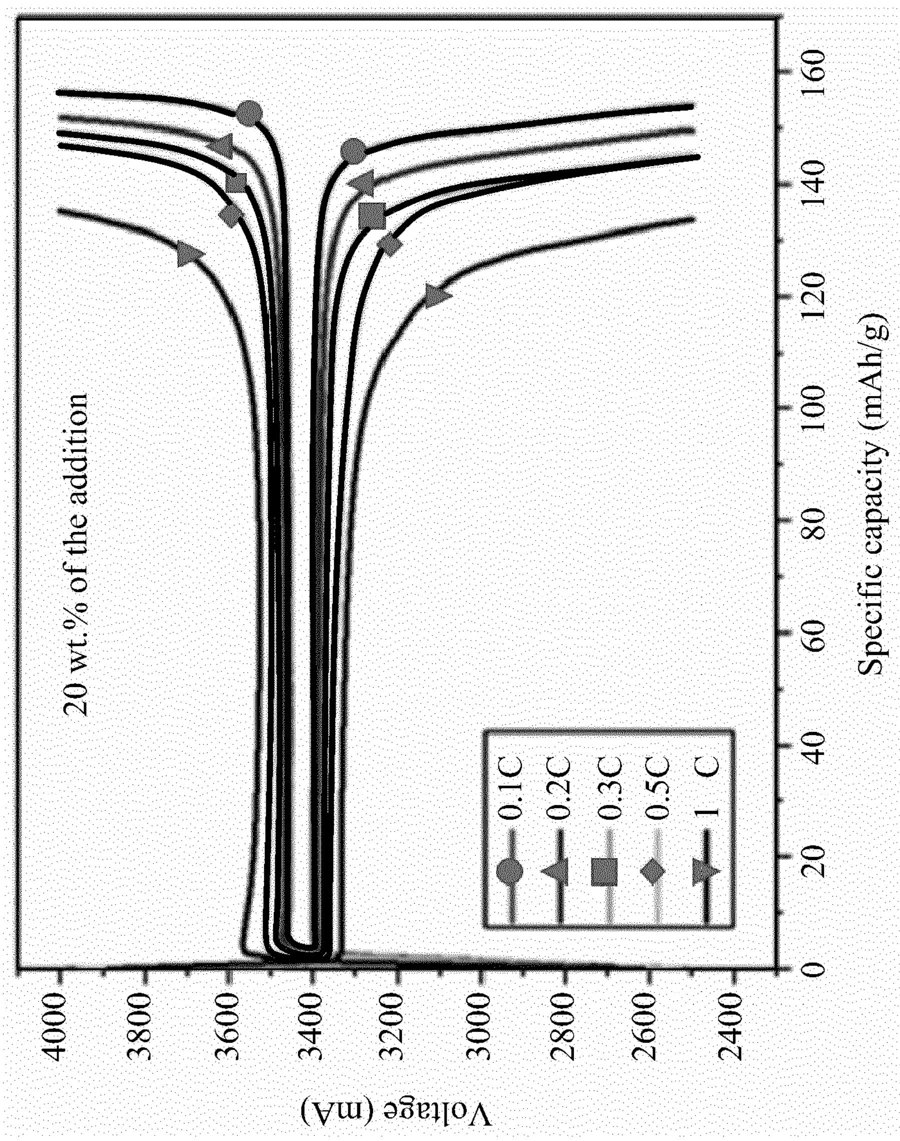
20 wt.% of the addition
Voltage (mA)
Specific capacity (mAh/g)
4000
3800
3600
3400
3200
3000
2800
2600
2400
0
20
40
60
80
100
120
140
160
0.1C
0.2C
0.3C
0.5C
1 C

FIG. 3E

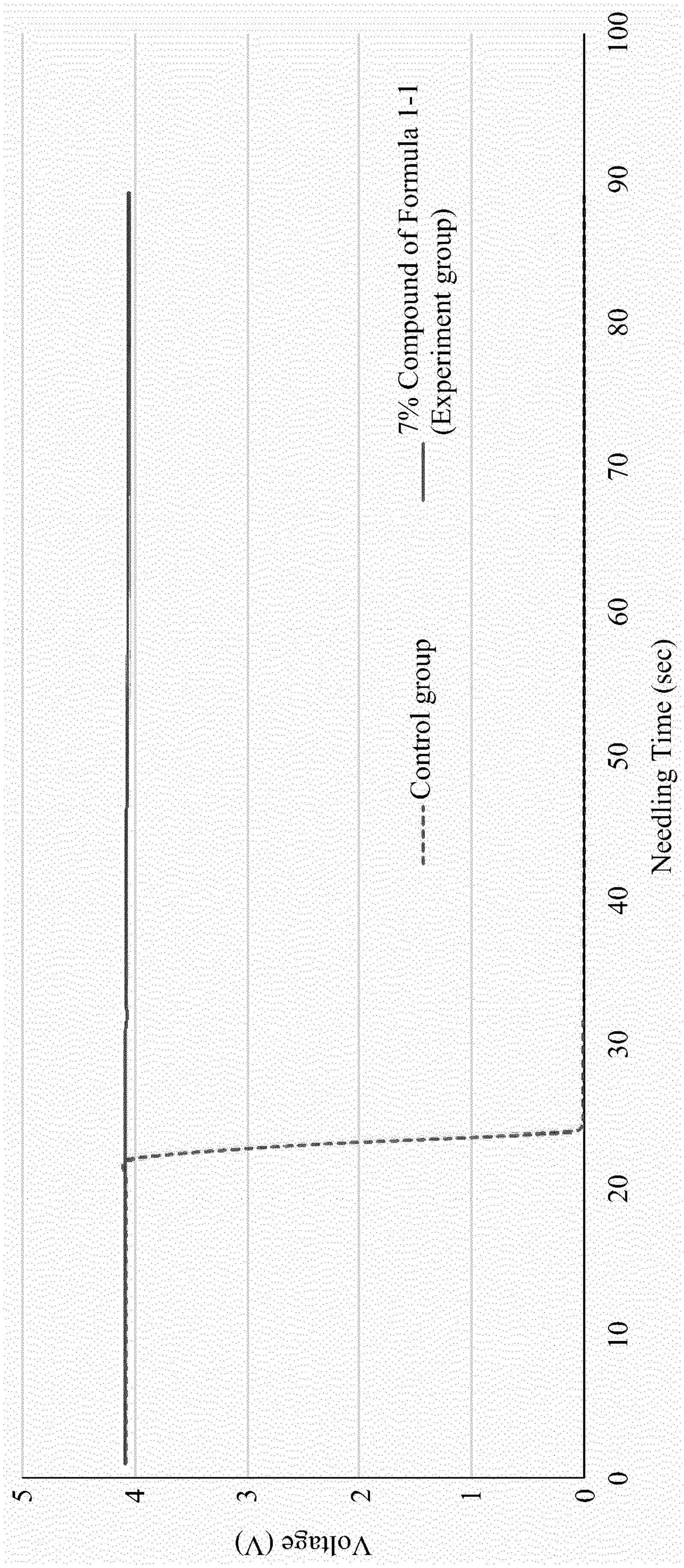
Voltage (V)
0
1
2
3
4
5
0
10
20
30
40
50
60
70
80
90
100
Needling Time (sec)
Control group
7% Compound of Formula 1-1
(Experiment group)

FIG. 4A

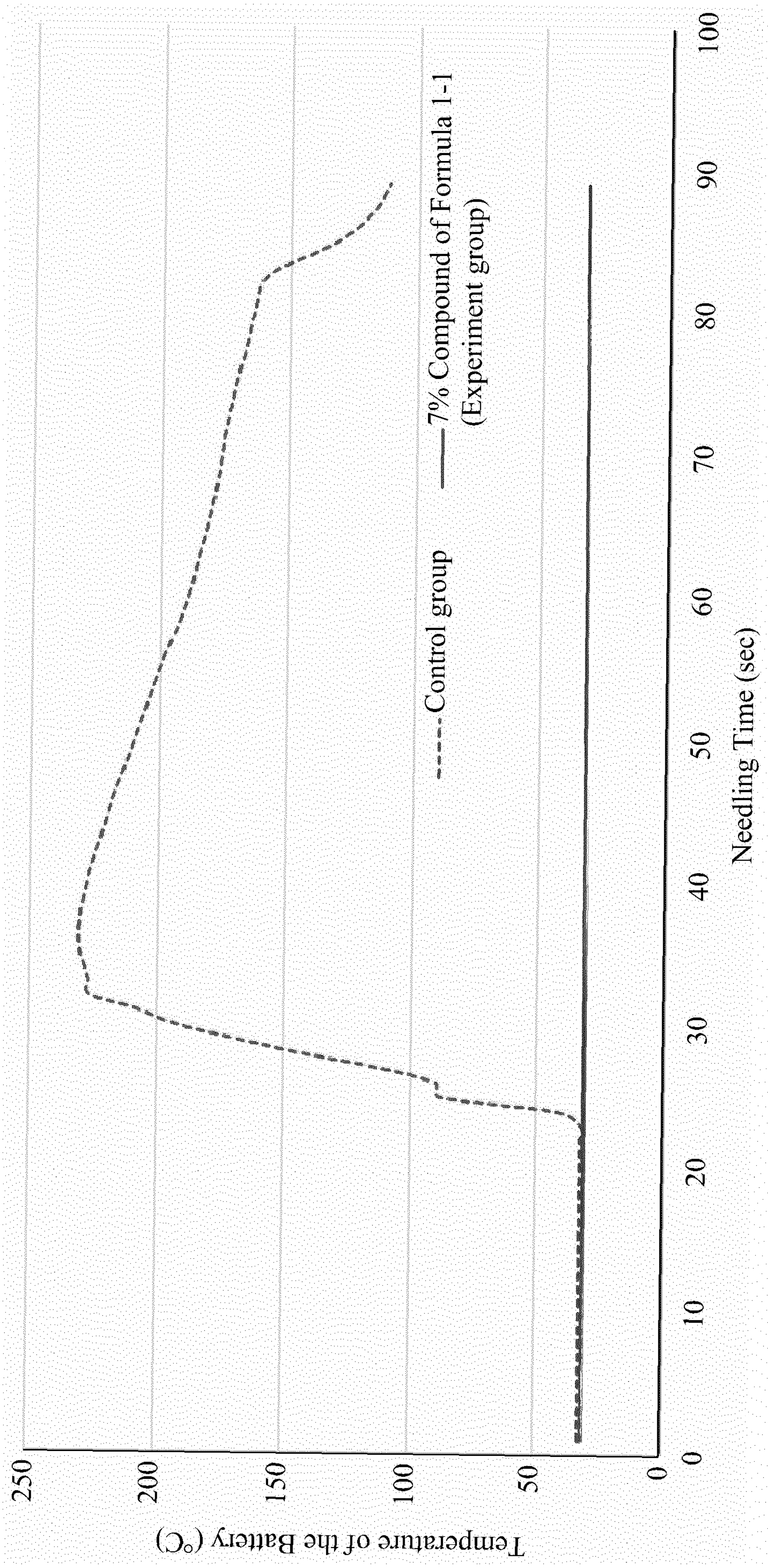
Temperature of the Battery (°C)
250
200
150
100
50
0
0
10
20
30
40
50
60
70
80
90
100
Needling Time (sec)
Control group
7% Compound of Formula 1-1 (Experiment group)

FIG. 4B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013196223 A1

### Non-patent literature cited in the description

- *Journal of Power Source*, 01 June 2003, vol. 119-121, 383-387
- *Journal of Power Source*, 15 March 2015, vol. 278, 190-196